# EUROPÄISCHE PATENTSCHRIFT

(11) **EP 3 376 419 B1**
(45) Veröffentlichungstag und Bekanntmachung des Hinweises auf die Patenterteilung: **11.08.2021**
(21) Anmeldenummer: 18159997.8
(22) Anmeldetag: 05.03.2018
(51) Int. Cl.: G06F 21/30, G06F 21/33, G06F 21/40, G06Q 10/00

(54) **SYSTEM UND VERFAHREN ZUM ELEKTRONISCHEN SIGNIEREN EINES DOKUMENTS**
SYSTEM AND METHOD FOR ELECTRONICALLY SIGNING A DOCUMENT
SYSTÈME ET MÉTHODE DE SIGNATURE ÉLECTRONIQUE D'UN DOCUMENT

(30) Priorität: 14.03.2017 DE 102017105396
(43) Veröffentlichungstag der Anmeldung: 19.09.2018
(73) Patentinhaber: Francotyp-Postalia GmbH, 13089 Berlin (DE)
(72) Erfinder: Waitz, Wilko, 15528 Spreenhagen (DE); Ludyga, Jürgen Paul, 31162 Bad Salzdetfurth (DE); Hohmann, Bernd, 31162 Bad Salzdetfurth (DE); Meinecke, Olaf, 31162 Bad Salzdetfurth (DE); Fieber, Sebastian, 31191 Algermissen (DE); Vorwachs, Tobias, 15517 Fürstenwalde (DE); Willig, Martin, 15890 Eisenhüttenstadt (DE); zur Horst-Meyer, Paul, 15517 Fürstenwalde (DE); Irmischer, Hendryk, D-13158 Berlin (DE)
(74) Vertreter: Cohausz & Florack

(56) Entgegenhaltungen:
- EP-A1- 2 905 925
- EP-A1- 3 107 029
- WO-A1-2009/012388

## Beschreibung

### HINTERGRUND DER ERFINDUNG

Die vorliegende Erfindung betrifft ein Verfahren zum elektronischen Signieren eines elektronischen Dokuments, bei dem ein Initiator eines Signaturvorgangs einen Anforderungsdatensatz erzeugt, der das elektronische Dokument und eine Signaturanforderung umfasst, wobei die Signaturanforderung eine Anforderung einer elektronischen Signatur wenigstens eines Signierers über wenigstens dem elektronischen Dokument umfasst. Der Anforderungsdatensatz wird dem wenigstens einen Signierer zur Erzeugung der elektronischen Signatur zumindest über dem elektronischen Dokument zur Verfügung gestellt. Der wenigstens eine Signierer erzeugt zumindest über dem elektronischen Dokument eine elektronische Signatur und einen positiven Antwortdatensatz, der zumindest das elektronische Dokument und die elektronische Signatur umfasst. Der positive Antwortdatensatz wird wenigstens einem Empfänger, insbesondere dem Initiator, zur Verfügung gestellt. Sie betrifft weiterhin ein entsprechendes Signatursystem, mithin also ein Datenverarbeitungssystem, welches ein solches Signaturverfahren ausführen kann.

Mit der stetig wachsenden Zunahme der Nutzung elektronischer Kommunikationsmittel wächst der Bedarf, elektronische Dokumente zumindest in gleicher Weise wie traditionell papiergebundene Dokumente rechtsverbindlich zu gestalten und insbesondere einen einfachen, rechtsverbindlichen elektronischen Austausch solcher Dokumente zu ermöglichen.

WO 2009/012388 A1 offenbart Systeme und Verfahren für Unterschriften in Verwaltungsvorgängen für Immobiliengeschäfte.

Um elektronische Dokumente gegen Manipulationen abzusichern, sind eine Reihe kryptographischer Verfahren entwickelt worden, welche unterschiedlichste Sicherheitsstufen zur Verfügung stellen. Im Zusammenhang mit Dokumenten im Rechtsverkehr liegt die primäre Anforderung traditionell darin, ein solches Dokument vor einer unerkannten späteren Manipulation zu schützen. Hierzu haben sich in Anlehnung an die traditionelle handschriftliche Unterschrift sogenannte digitale Signaturen etabliert, die in hinlänglich bekannter Weise meist unter Verwendung von Schlüsselpaaren aus einem öffentlichen und einem geheimen Schlüssel einer sogenannten Public-Key-Infrastruktur erzeugt werden. Dem Schlüsselpaar sind typischerweise ein oder mehrere digitale Zertifikate zugeordnet, welche in hinlänglich bekannter Weise eine Vertrauenskette zu einer vertrauenswürdigen Instanz der Infrastruktur herstellen.

Eine digitale Signatur wird typischerweise mittels eines kryptographischen Verfahrens erzeugt, bei dem der Signierer des elektronischen Dokuments aus dem Dokument mit einem entsprechenden Algorithmus einen Nachrichtenkern erzeugt und diesen Nachrichtenkern dann mit seinem geheimen Schlüssel verschlüsselt, um die digitale Signatur zu generieren. Die digitale Signatur wird dann zusammen mit dem Dokument übermittelt wird. Der Empfänger kann dann aus dem erhaltenen Dokument mit demselben Algorithmus ebenfalls einen Nachrichtenkern erzeugen, anhand des öffentlichen Schlüssels des Signierers die Signatur entschlüsseln, um so den Nachrichtenkern aus der Signatur zu erhalten. Stimmt der Nachrichten kann aus der Signatur mit dem aus dem erhaltenen Dokument erzeugten Nachrichtenkern überein, wurde das Dokument nicht verändert.

Typischerweise muss Signierer ein entsprechendes Schlüsselpaar, entsprechende Zertifikate und entsprechenden Algorithmen in einer lokalen Infrastruktur vorhalten, um solche digitale Signaturen erzeugen zu können. In der täglichen Kommunikation, in der Nachrichten häufig auch über mobile Geräte ausgetauscht werden bzw. zu Zeitpunkten ausgetauscht werden, zu denen ein Nutzer nicht einfach auf die eigene lokale Infrastruktur zugreifen kann, stellt dies ein Hindernis für die rechtsverbindliche digitale Kommunikation dar.

Es sind gattungsgemäße Signaturverfahren bekannt, bei denen ein Nutzer ein Dokument, für das er von einem Initiator eine Anforderung zur Signatur erhalten hat, auf einer Webseite eines Signaturanbieters hochladen kann und dann seitens des Signaturanbieters mit einer Signatur versehen lassen kann, die auf einem dem Nutzer zugeordneten Zertifikat beruht. Der Nutzer erhält das signierte Dokument dann zurück und kann dieses entsprechend weiterverwenden, beispielsweise an den anfordernden Initiator zurücksenden. Dies stellt zwar insoweit eine Verbesserung dar, als der Nutzer nicht mehr auf seine lokale Infrastruktur zugreifen muss, um die Signatur zu erzeugen, sondern beispielsweise über ein entsprechendes Webportal auf die Infrastruktur des Signaturanbieters zugreifen kann. Dennoch ist auch dieser Signaturvorgang noch vergleichsweise umständlich.

Dem Nutzer steht dabei typischerweise lediglich eine Art von Signatur zur Verfügung und es liegt in seiner Hand, diese Signatur in der Hoffnung durchzuführen, dass die Signatur den Anforderungen des Initiators entspricht. Ist dies nicht der Fall, muss der Initiator eine erneute Signatur anfordern bzw. von vornherein eine entsprechende Vorgabe machen, welche der Nutzer dann umsetzen muss.

### KURZE ZUSAMMENFASSUNG DER ERFINDUNG

Vor diesem Hintergrund liegt der Erfindung die Aufgabe zugrunde, Verfahren zum elektronischen Signieren eines elektronischen Dokuments sowie ein entsprechendes Signatursystem zur Verfügung zu stellen, welches diese Nachteile nicht oder zumindest in geringerem Maße aufweist und insbesondere eine einfache und schnelle Abwicklung eines solchen Signaturvorgangs ermöglicht.

Der Erfindung liegt die technische Lehre zugrunde, dass eine einfache und schnelle Abwicklung eines Signaturvorgangs ermöglicht wird, wenn für die elektronische Signatur wenigstens zwei Signaturstufen mit unterschiedlichen Sicherheitsstufen der elektronischen Signatur vorgegeben sind und die Signaturanforderung eine durch den Initiator vorgebbare Signaturvorgabe umfasst, welche eine Mindestsicherheitsstufe definiert, welche die elektronische Signatur des wenigstens einen Signierers über dem elektronischen Dokument mindestens aufweisen muss. Hiermit ist es in einfacher Weise insbesondere möglich, einen automatisierten Signaturprozess zu implementieren, der einen reibungslosen Ablauf nach den Vorgaben des Initiators des Signaturprozesses ermöglicht.

Insbesondere lassen sich damit plattformbasierte Lösungen für den elektronischen bzw. digitalen Abschluss von Verträgen und den rechtssicheren Austausch von elektronischen Dokumenten realisieren. Hierbei können Dokumente in einfacher Weise digital und rechtskonform unterzeichnet und gegengezeichnet werden. Dabei können insbesondere nutzerfreundliche Portallösungen implementiert werden, die beispielsweise durch eine Online-Authentifizierung der Nutzer (z.B. durch Videoidentifizierung oder mit mobilen TAN-Verfahren) einen schnellen und einfachen Zugang zu einem solchen Signatursystem und damit eine einfache Teilnahme aller Parteien im digitalen Rechtsverkehr ermöglichen.

Bei elektronischen Dokumenten im Sinne der vorliegenden Erfindung kann es sich um beliebige elektronische Dokumente handeln, welche einer entsprechenden digitalen Signatur zugänglich sind. Hierbei kann es sich um beliebige Dateien handeln, die Texte, Bilder, Töne und sonstige Daten alleine oder in beliebiger Kombination umfassen.

Nach einem Aspekt betrifft die Erfindung daher ein Verfahren und ein System zum elektronischen Signieren eines elektronischen Dokuments, bei dem ein Initiator eines Signaturvorgangs einen Anforderungsdatensatz erzeugt, der das elektronische Dokument und eine Signaturanforderung umfasst, wobei die Signaturanforderung eine Anforderung einer elektronischen Signatur wenigstens eines Signierers über wenigstens dem elektronischen Dokument umfasst. Der Anforderungsdatensatz wird dem wenigstens einen Signierer zur Erzeugung der elektronischen Signatur zumindest über dem elektronischen Dokument zur Verfügung gestellt. Der wenigstens eine Signierer erzeugt zumindest über dem elektronischen Dokument eine elektronische Signatur und einen positiven Antwortdatensatz, der zumindest das elektronische Dokument und die elektronische Signatur umfasst. Der positive Antwortdatensatz wird wenigstens einem Empfänger, insbesondere dem Initiator, zur Verfügung gestellt. Für die elektronische Signatur sind wenigstens zwei Signaturstufen mit unterschiedlichen Sicherheitsstufen der elektronischen Signatur vorgegeben sind, wobei die Signaturanforderung eine durch den Initiator vorgebbare Signaturvorgabe umfasst, welche eine Mindestsicherheitsstufe definiert, welche die elektronische Signatur des wenigstens einen Signierers über dem elektronischen Dokument mindestens aufweisen muss, wobei der Initiator als Initiatorsignatur eine elektronische Signatur über dem elektronischen Dokument erzeugt und der Anforderungsdatensatz die Initiatorsignatur umfasst, wobei eine Sicherheitsstufe der Initiatorsignatur die Mindestsicherheitsstufe definiert.

Durch die Signaturvorgabe kann der Initiator in vorteilhafter Weise also bereits eine entsprechende Vorgabe hinsichtlich der aus seiner Sicht mindestens erforderlichen Sicherheitsstufe der angeforderten Signatur machen, welche dann automatisch ohne weiteren Eingriff bzw. weitere diesbezügliche Eingaben des Signieren verarbeitet werden kann. Hierdurch kann der Signaturprozess erheblich beschleunigt und vereinfacht werden. Dies ist in hohem Maße vorteilhaft für die Nutzerakzeptanz und Durchsetzung solcher Verfahren im Rechtsverkehr.

Grundsätzlich kann vorgesehen sein, dass der Signierer sich gegebenenfalls auch über die Vorgabe des Initiators hinwegsetzen kann, also auch einen Antwortdatensatz ohne Signatur oder mit einer Signatur mit geringerer Sicherheitsstufe (als der vorgegebenen Mindestsicherheitsstufe) erzeugen kann. Vorzugsweise ist jedoch vorgesehen, dass der wenigstens eine Signierer den positiven Antwortdatensatz nur dann erzeugen kann, wenn über dem elektronischen Dokument eine elektronische Signatur des wenigstens einen Signierers gemäß der Signaturvorgabe erzeugt wurde. Zusätzlich oder alternativ kann vorgesehen sein, dass der positive Antwortdatensatz dem Empfänger nur zur Verfügung gestellt wird, wenn über dem elektronischen Dokument eine elektronische Signatur des wenigstens einen Signierers gemäß der Signaturvorgabe erzeugt wurde. Hiermit kann sichergestellt werden, dass unmittelbar erkennbar wird, dass der Signaturprozess fehlgeschlagen ist.

Bei bestimmten Varianten ist vorgesehen, dass der wenigstens eine Signierer einen negativen Antwortdatensatz erzeugt, wenn er die elektronische Signatur gemäß der Signaturvergabe verweigert, und der negative Antwortdatensatz dem Empfänger zur Verfügung gestellt wird. Dabei kann vorgesehen sein, dass der negative Antwortdatensatz zumindest einen Hinweis auf den Anforderungsdatensatz umfasst, um den Antwortdatensatz ohne weiteres dem Anforderungsdatensatz zuordnen zu können. Hierbei kann beispielsweise eine entsprechende, ausreichend eindeutige Identifikation des Anforderungsdatensatzes verwendet werden. Zusätzlich oder alternativ kann der negative Antwortdatensatz das elektronische Dokument umfassen. Hiermit lässt sich jeweils in einfacher Weise das Fehlschlagen des Signaturprozesses erkennen bzw. nachvollziehen. Gegebenenfalls kann auch vorgesehen sein, dass der negative Antwortdatensatz eine Begründungsinformation für die Verweigerung der elektronischen Signatur gemäß der Signaturvorgabe umfasst. Dies ist insbesondere für das weitere zielgerichtete Vorgehen nach dem Fehlschlagen des Signaturprozesses von Vorteil.

Grundsätzlich kann vorgesehen sein, dass der Initiator den Signaturvorgang initiiert, ohne selbst eine Signatur über dem Dokument zu erzeugen.

Grundsätzlich kann vorgesehen sein, dass der Signaturvorgang nur zwischen zwei Parteien, dem Initiator und dem Signierer abgewickelt wird. Besonders vorteilhaft lässt sich die Erfindung aber in Verbindung mit Signaturprozessen einsetzen, bei denen mehr als zwei Parteien beteiligt sind. Bei vorteilhaften Varianten ist daher vorgesehen, dass der wenigstens eine Signierer ein erster Signierer ist, die Anforderung der elektronischen Signatur des ersten Signierers in dem Anforderungsdatensatz eine erste Anforderung einer ersten elektronischen Signatur ist und der Antwortdatensatz ein erster Antwortdatensatz ist. In diesem Fall kann dann der Initiator dem Anforderungsdatensatz und/oder der erste Signierer dem ersten Antwortdatensatz eine zweite Anforderung einer zweiten elektronischen Signatur eines zweiten Signierers über wenigstens dem elektronischen Dokument beifügen. Der erste Antwortdatensatz wird dann dem zweiten Signierer zur Erzeugung der zweiten elektronischen Signatur zumindest über dem elektronischen Dokument zur Verfügung gestellt. Der zweite Signierer erzeugt dann zumindest über dem elektronischen Dokument die zweite elektronische Signatur und einen zweiten Antwortdatensatz, der zumindest das elektronische Dokument und die zweite elektronische Signatur sowie gegebenenfalls auch die erste elektronische Signatur umfasst. Schließlich wird der zweite Antwortdatensatz wenigstens einem Empfänger, insbesondere dem Initiator, zur Verfügung gestellt. Hiermit ist es in einfacher Weise möglich, auf schnellem Wege mehrere (gegebenenfalls rechtsverbindliche) Signaturen von mehr als zwei Parteien über einem elektronischen Dokument anzufordern und zu erhalten.

Insbesondere ist es hiermit für den Initiator möglich, unterschiedliche Sicherheitsstufen für die einzelnen Signaturen vorzugeben. So kann beispielsweise für einen Signierer eine sogenannte qualifizierte elektronische Signatur (qeS) vorgegeben sein, während für einen weiteren Signierer lediglich eine Signatur mit einem niedrigeren Sicherheitsniveau vorgegeben sein kann. Insbesondere ist es auch möglich, für einen oder mehrere Signierer lediglich eine Lesebestätigung oder Empfangsbestätigung ohne Signatur vorzugeben.

Gegebenenfalls ist es aber auch möglich, dass ein Signierer weitere Signaturen über diejenigen hinaus anfordert, die von dem Initiator angefordert wurden, wobei dieser Signierer dann gegebenenfalls selbst die Mindestsignaturstufe für diese zusätzlichen Signaturen vorgeben kann. Hierbei kann jedoch gegebenenfalls vorgesehen sein, dass die zusätzlichen Signaturen nicht unterhalb der von dem Initiator angeforderten Mindestsignaturstufe liegen.

Die zweite Anforderung kann daher eine vorgebbare zweite Signaturvorgabe umfassen, welche eine Mindestsicherheitsstufe definiert, welche die zweite elektronische Signatur des zweiten Signierers über dem elektronischen Dokument mindestens aufweisen muss. Gegebenenfalls kann die Mindestsicherheitsstufe der zweiten elektronischen Signatur wie beschrieben gleich der Mindestsicherheitsstufe der ersten elektronischen Signatur sein oder von der Mindestsicherheitsstufe der ersten elektronischen Signatur abweichen.

Bei bestimmten Varianten kann vorgesehen sein, dass eine Statusinformation über einen Status des Signaturvorgangs erzeugt und an einen Empfänger, insbesondere an den Initiator und/oder eine Statusdatenbank, übermittelt wird. Hierdurch ist es möglich, die Historie des Signaturvorgangs nachzuvollziehen. Dies kann gegebenenfalls zumindest nahezu in Echtzeit erfolgen, wenn eine Aktualisierung der Statusinformation jeweils unmittelbar zu relevanten Zeitpunkten erfolgt, zu denen eine Statusänderung eintritt. Ebenso kann aber auch vorgesehen sein, dass der Antwortdatensatz und/oder der Anforderungsdatensatz die Statusinformation umfasst. Hiermit ist es dann zumindest nachträglich möglich, die Historie des Signaturvorgangs nachzuvollziehen.

Eine Aktualisierung der Statusinformation kann jeweils zu Zeitpunkten erfolgen, zu denen eine (insbesondere rechtlich) relevante Statusänderung eintritt. Die Statusinformation kann während oder nach einem Erstellen einer elektronischen Signatur über dem elektronischen Dokument übermittelt und damit aktualisiert werden. Zusätzlich oder alternativ kann die Statusinformation während oder nach einem Erstellen einer elektronischen Signatur übermittelt und damit aktualisiert werden. Zusätzlich oder alternativ kann die Statusinformation während oder nach dem Zurverfügungstellen des Antwortdatensatzes übermittelt und damit aktualisiert werden. In allen diesen Fällen ist in vorteilhafter Weise sichergestellt, dass relevante Statusänderungen nachvollziehbar sind. Besonders vorteilhaft ist es dabei, wenn die Statusinformation eine Begründungsinformation für eine Verweigerung der elektronischen Signatur umfasst.

Das erfindungsgemäße Signaturverfahren kann grundsätzlichen beliebigen geeigneten digitalen Umgebungen unter Verwendung beliebiger digitaler Infrastrukturen umgesetzt werden. Besonders vorteilhaft lässt sich einsetzen, wenn ein Signaturdienstanbieter eine entsprechend sichere Signaturumgebung zur Verfügung stellt, in der vorzugsweise zumindest ein Großteil der sicherheitsrelevanten Vorgänge abgewickelt wird. Derartige sichere Umgebungen sind hinlänglich bekannt und beruhen typischerweise auf entsprechend starken kryptographischen Systemen bzw. Algorithmen, welche die sichere Umgebung vor unautorisierten und/oder unerkanntem Zugriff durch Dritte sichern. Es versteht sich dabei, dass eine sichere Umgebung über die Grenzen mehrerer Datenverarbeitungseinrichtungen hinweg in hinlänglich bekannter Weise durch eine entsprechend starke kryptographischer Absicherung, beispielsweise eine entsprechende Verschlüsselung der Kommunikationskanäle zwischen den Datenverarbeitungseinrichtungen abgesichert werden kann. Derartige Sicherungsmechanismen sind hinlänglich bekannt und nicht Gegenstand der vorliegenden Erfindung, sodass insoweit auch weitere Erläuterungen verzichtet wird.

Bei Varianten mit einer solchen sicheren Signaturumgebung ist bevorzugt vorgesehen, dass der Initiator sich in einem ersten Identifikationsschritt des Signaturvorgangs gegenüber dem Signaturdienstanbieter zum Zugriff auf die Signaturumgebung identifiziert und autorisiert. Der Initiator bringt dann in einem dem ersten Identifikationsschritt nachfolgenden Schritt des Signaturvorgangs das elektronische Dokument in die sichere Umgebung ein und erzeugt innerhalb der Signaturumgebung den Anforderungsdatensatz. Hierbei kann vorgesehen sein, dass der Initiator ein bereits vorhandenes Dokument in die Signaturumgebung lädt. Ebenso kann er aber das Dokument auch erst in der Signaturumgebung generieren.

Im weiteren Verlauf ist vorgesehen, dass der wenigstens eine Signierer sich in einem zweiten Identifikationsschritt gegenüber dem Signaturdienstanbieter zum Zugriff auf die Signaturumgebung identifiziert und autorisiert. Der wenigstens eine Signierer erzeugt dann in einem dem zweiten Identifikationsschritt nachfolgenden Schritt des Signaturvorgangs in der Signaturumgebung die elektronische Signatur über dem elektronischen Dokument und den Antwortdatensatz.

Dabei kann in vorteilhafter Weise vorgesehen sein, dass der Anforderungsdatensatz dem wenigstens einen Signierer und/oder der Antwortdatensatz dem wenigstens einen Empfänger innerhalb der Signaturumgebung zur Verfügung gestellt wird. Mithin kann also vorgesehen sein, dass das Dokument bzw. die zugeordneten Datensätze die sichere Umgebung nicht verlassen müssen. Dies ist von besonderem Vorteil, da hiermit eine besonders schnelle und reibungslose Abwicklung möglich wird.

Insbesondere kann vorgesehen sein, dass dem wenigstens einen Signierer eine Anforderungsmitteilung übermittelt wird, wobei die Anforderungsmitteilung insbesondere einen Link zum Zugriff auf den Anforderungsdatensatz umfasst, der in der Signaturumgebung zur Verfügung gestellt ist. Hiermit ist ein besonders schneller und einfacher Zugang des Signierers zu der sicheren Signaturumgebung möglich. Insbesondere kann vorgesehen sein, dass die Anforderungsmitteilung zumindest abschnittsweise außerhalb der Signaturumgebung übermittelt wird. Hiermit ist eine schnelle und einfache Benachrichtigung des Signierers über beliebige Kommunikationskanäle (E-Mail, SMS, sonstige elektronische Mitteilungskanäle) möglich, ohne die Sicherheit zu beeinträchtigen.

Ähnliches kann für eine Benachrichtigung eines Empfängers hinsichtlich des Antwortdatensatzes vorgesehen sein. Mithin kann also dem wenigstens einen Empfänger eine Antwortmitteilung übermittelt werden, wobei die Antwortmitteilung insbesondere einen Link zum Zugriff auf den Antwortdatensatz umfasst, der in der Signaturumgebung zur Verfügung gestellt ist. Auch hier kann die Antwortmitteilung zumindest abschnittsweise außerhalb der Signaturumgebung übermittelt werden.

Es versteht sich, dass die jeweilige Signatur unter Verwendung beliebiger geeigneter Signaturverfahren erzeugt werden kann, welche den Anforderungen des Initiators entsprechen. Bei bestimmten Varianten ist vorgesehen, dass der Signaturdienstanbieter die elektronische Signatur des Signierers über dem elektronischen Dokument in der Signaturumgebung unter Verwendung eines digitalen Zertifikates erzeugt, das dem Signierer oder dem Signaturdienstanbieter zugeordnet ist. Hiermit kann eine besonders einfache Abwicklung sichergestellt werden, da der einzelne Signierer keinen Zugriff auf seine eigene Infrastruktur benötigt, um die Signatur zu erzeugen.

Bei bestimmten Varianten wird für die elektronische Signatur des Signierers ein digitales Zertifikat des Signierers verwendet, das in der Signaturumgebung verfügbar ist, insbesondere in einer Datenbank des Signaturanbieters gespeichert ist. Mit anderen Worten kann der Signaturanbieter das digitale Zertifikat des Signierers vorhalten, das er beispielsweise vorab in einem entsprechenden (typischerweise wechselseitigen) Identifikations- und/oder Autorisierungsprozess erhalten hat.

Zusätzlich oder alternativ kann auch vorgesehen sein, dass für die elektronische Signatur des Signierers ein digitales Zertifikat des Signaturdienstanbieters verwendet wird, das in der Signaturumgebung verfügbar ist, insbesondere in einer Datenbank des Signaturanbieters gespeichert ist. Mithin kann also eine sogenannte intermediäre Signatur verwendet werden, mit welcher der Signaturdienstanbieter das Dokument mit seiner Signatur versieht. Hiermit kann gegebenenfalls über den Signaturdienstanbieter eine Vertrauenskette zwischen dem Initiator und dem Signierer geschlossen werden, sofern ein entsprechendes Vertrauensverhältnis zwischen dem Signierer und dem Signaturdienstanbieter besteht.

Zusätzlich oder alternativ kann der Signaturdienstanbieter für die elektronische Signatur des Signierers auf eine dem Signierer zugeordnete externe Signaturinfrastruktur zugreifen, welche in die Signaturumgebung eingebunden wird und ein digitales Zertifikat des Signierers umfasst. Hiermit ist es auch besonders einfach in vorteilhafter Weise möglich, über den Signaturdienstanbieter beliebige bestehende Signaturinfrastrukturen beliebiger Personen und/oder Institutionen in das System bzw. die sicheren Grenzen der Signaturumgebung einzubinden, sofern eine entsprechende Vertrauenskette zwischen dem Signaturdienstanbieter und der externen Signaturinfrastruktur hergestellt ist. Dabei kann insbesondere vorgesehen sein, dass die elektronische Signatur des Signierers auf Anforderung des Signaturdienstanbieters durch die externe Signaturinfrastruktur erzeugt wird. Dies kann dann gegebenenfalls geschehen, ohne dass die sichere Signaturumgebung verlassen wird.

Die jeweilige Identifikation und Autorisierung der Teilnehmer gegenüber dem Signaturdienstanbieter kann grundsätzlich auf beliebige geeignete Weise geschehen. Hier können beliebige geeignete Identifikationsmechanismen zum Einsatz kommen. Beispielsweise können herkömmliche Verfahren zum Einsatz kommen, bei denen sich der Teilnehmer gegenüber einer vertrauenswürdigen Person (beispielsweise eine Mitarbeiter einer vertrauenswürdigen Institution, wie einem Postdienstleister oder dergleichen) identifiziert und in einem nachfolgenden Prozess autorisiert wird.

Besonders vorteilhaft ist es, wenn der erste Identifikationsschritt und/oder der zweite Identifikationsschritt unter Verwendung eines Online-Identifikationsmechanismus erfolgt. Dabei können beliebige Mechanismen zur Anwendung kommen, welche online eine solche Identifizierung und Autorisierung eines Nutzers ermöglichen. Insbesondere kann eine elektronische Identität (beispielsweise aus einem anderen Vertrag mit einem Dienstanbieter, insbesondere mit dem Signaturdienstanbieter oder aus einem sozialen Netzwerk) und/oder ein elektronisches Ausweisdokument (beispielsweise ein digitaler Reisepass oder Personalausweis) und/oder eine elektronische Signaturkarte des Initiators und/oder des Signierers verwendet werden. In allen diesen Fällen ist ein schneller Zugang zu dem Signatursystem und damit eine Erhöhung der Akzeptanz und Durchsetzung solcher Systeme im elektronischen Rechtsverkehr möglich.

Der Zugang zu dem Signatursystem kann auf beliebige geeignete Weise erfolgen. Vorzugsweise ist vorgesehen, dass der Initiator und/oder der Signierer und/oder der Empfänger für den Zugang zu der Signaturumgebung eine Signaturanwendung verwendet, die zumindest teilweise auf einer lokalen Datenverarbeitungseinrichtung ausgeführt wird und/oder zumindest teilweise auf einem entfernten Server des Signaturdienstanbieters ausgeführt wird. Bei der lokalen Datenverarbeitungseinrichtung kann es sich um eine beliebige Datenverarbeitungseinrichtung des Nutzers, beispielsweise beispielsweise um einen herkömmlichen Computer (PC) oder ein Mobilgerät des jeweiligen Nutzers handeln.

Dabei kann insbesondere vorgesehen sein, dass die Signaturanwendung ein erstes Signaturmodul und ein zweites Signaturmodul umfasst, wobei das erste Signaturmodul auf der lokalen Datenverarbeitungseinrichtung ausgeführt wird und, insbesondere im Hintergrund, auf das zweite Signaturmodul zugreift, welches auf dem entfernten Server des Signaturdienstanbieters ausgeführt wird. Hiermit ist es insbesondere in einfacher Weise möglich, das Signatursystem im Hintergrund in bestehende Prozesse bzw. Infrastrukturen eines Inhabers der lokalen Datenverarbeitungseinrichtung einzubinden.

Die im Zuge der Abwicklung des Signaturvorgangs stattfindende Kommunikation kann grundsätzlich über beliebige Kommunikationskanäle erfolgen. Wie beschrieben kann gegebenenfalls ein Teil der Kommunikation außerhalb der sicheren Signaturumgebung erfolgen. Dabei muss das zu signierende Dokument und/oder der jeweils zugehörige Anforderungsdatensatz und/oder Antwortdatensatz die sichere Signaturumgebung gegebenenfalls nicht verlassen.

Besonders vorteilhaft lässt sich die Erfindung aber auch im Zusammenhang mit sogenannten Onlinekonferenzen anwenden. Hierbei können beispielsweise die Teilnehmer an einer Onlinekonferenz innerhalb der Onlinekonferenz ein hochgeladenes und/oder gemeinsam bearbeitetes Dokument auf Initiative eines der Teilnehmer (des Initiators) online in der beschriebenen Weise mit entsprechenden digitalen Signaturen versehen. Die Signaturanwendung ist in diesem Fall vorzugsweise eine Komponente einer Onlinekonferenzanwendung, wobei der Signaturvorgang dann zumindest teilweise, insbesondere vollständig, innerhalb einer Onlinekonferenzsitzung abgewickelt wird.

Die vorliegende Erfindung betrifft weiterhin ein Signatursystem zum elektronischen Signieren eines elektronischen Dokuments, insbesondere zur Durchführung eines erfindungsgemäßen Verfahrens, das wenigstens eine Datenverarbeitungseinrichtung zum Ausführen zumindest eines Teils einer Signaturanwendung umfasst. Dabei ist die Signaturanwendung derart ausgebildet ist, dass ein Initiator eines Signaturvorgangs einen Anforderungsdatensatz erzeugt, der das elektronische Dokument und eine Signaturanforderung umfasst, wobei die Signaturanforderung eine Anforderung einer elektronischen Signatur wenigstens eines Signierers über wenigstens dem elektronischen Dokument umfasst. Die Signaturanwendung ist weiterhin derart ausgebildet, dass der Anforderungsdatensatz dem wenigstens einen Signierer zur Erzeugung der elektronischen Signatur zumindest über dem elektronischen Dokument zur Verfügung gestellt wird. Die Signaturanwendung ist weiterhin derart ausgebildet, dass der wenigstens eine Signierer zumindest über dem elektronischen Dokument eine elektronische Signatur erzeugt und einen positiven Antwortdatensatz erzeugt, der zumindest das elektronische Dokument und die elektronische Signatur umfasst. Die Signaturanwendung ist weiterhin derart ausgebildet, dass der positive Antwortdatensatz wenigstens einem Empfänger, insbesondere dem Initiator, zur Verfügung gestellt wird. Dabei sind für die elektronische Signatur wenigstens zwei Signaturstufen mit unterschiedlichen Sicherheitsstufen der elektronischen Signatur vorgegeben. Die Signaturanwendung ist dann derart ausgebildet, dass die Signaturanforderung eine durch den Initiator vorgebbare Signaturvorgabe umfasst, welche eine Mindestsicherheitsstufe definiert, welche die elektronische Signatur des wenigstens einen Signierers über dem elektronischen Dokument mindestens aufweisen muss. Hiermit lassen sich die oben im Zusammenhang mit dem erfindungsgemäßen Verfahren beschriebenen Vorteile und Varianten in demselben Maße realisieren, sodass insoweit lediglich auf die obigen Ausführungen verwiesen wird. Vorzugsweise ist die Signaturanwendung dabei ein aus einer oder mehreren Komponenten bestehendes lauffähiges Programm, welches auf einer oder mehreren Datenverarbeitungseinrichtungen ausgeführt wird, um die oben im Zusammenhang mit dem erfindungsgemäßen Verfahren beschriebenen Funktionen bzw. Verfahrensschritte auszuführen.

Vorzugsweise ist die Signaturanwendung derart ausgebildet, dass der wenigstens eine Signierer den positiven Antwortdatensatz nur erzeugen kann, wenn über dem elektronischen Dokument eine elektronische Signatur des wenigstens einen Signierers gemäß der Signaturvorgabe erzeugt wurde. Zusätzlich oder alternativ kann die Signaturanwendung derart ausgebildet sein, dass der positive Antwortdatensatz dem Empfänger nur zur Verfügung gestellt wird, wenn über dem elektronischen Dokument eine elektronische Signatur des wenigstens einen Signierers gemäß der Signaturvorgabe erzeugt wurde. Zusätzlich oder alternativ kann die Signaturanwendung derart ausgebildet sein, dass der wenigstens eine Signierer einen negativen Antwortdatensatz erzeugt, wenn er die elektronische Signatur gemäß der Signaturvergabe verweigert, und der negative Antwortdatensatz dem Empfänger zur Verfügung gestellt wird. Zusätzlich oder alternativ kann die Signaturanwendung derart ausgebildet sein, dass eine Statusinformation über einen Status des Signaturvorgangs erzeugt und an einen Empfänger übermittelt wird, insbesondere an den Initiator und/oder eine Statusdatenbank, die in der wenigstens einen Datenverarbeitungseinrichtung gehalten wird.

Das Signatursystem kann grundsätzlich eine beliebige Anzahl von entsprechenden Datenverarbeitungseinrichtungen umfassen. Vorzugsweise ist die wenigstens eine Datenverarbeitungseinrichtung ein Server eines Signaturdienstanbieters, und es wird zumindest ein Teil der Signaturanwendung auf dem Server ausgeführt, um eine sichere Signaturumgebung zur Verfügung zu stellen. Vorzugsweise ist die Signaturanwendung dabei derart ausgebildet, dass der Initiator sich in einem ersten Identifikationsschritt des Signaturvorgangs gegenüber dem Signaturdienstanbieter zum Zugriff auf die Signaturumgebung identifiziert und autorisiert. Die Signaturanwendung kann dabei derart ausgebildet sein, dass der Initiator in einem dem ersten Identifikationsschritt nachfolgenden Schritt des Signaturvorgangs das elektronische Dokument in die sichere Umgebung einbringt und innerhalb der Signaturumgebung, insbesondere auf dem Server, den Anforderungsdatensatz erzeugt. Weiterhin kann vorgesehen sein, dass die Signaturanwendung derart ausgebildet ist, dass der wenigstens eine Signierer sich in einem zweiten Identifikationsschritt gegenüber dem Signaturdienstanbieter zum Zugriff auf die Signaturumgebung identifiziert und autorisiert. Schließlich kann vorgesehen sein, dass die Signaturanwendung derart ausgebildet ist, dass der wenigstens eine Signierer in einem dem zweiten Identifikationsschritt nachfolgenden Schritt des Signaturvorgangs in der Signaturumgebung die elektronische Signatur über dem elektronischen Dokument und den Antwortdatensatz erzeugt.

Bei bestimmten Varianten ist die Signaturanwendung derart ausgebildet, dass der Anforderungsdatensatz dem wenigstens einen Signierer und/oder der Antwortdatensatz dem wenigstens einen Empfänger insbesondere innerhalb der Signaturumgebung, insbesondere auf dem Server, zur Verfügung gestellt wird.

Zusätzlich oder alternativ kann die Signaturanwendung derart ausgebildet sein, dass dem wenigstens einen Signierer eine Anforderungsmitteilung übermittelt wird, wobei die Anforderungsmitteilung insbesondere einen Link zum Zugriff auf den Anforderungsdatensatz ausgehend von einer weiteren Datenverarbeitungseinrichtung, insbesondere einer lokalen Datenverarbeitungseinrichtung, umfasst, wobei der Anforderungsdatensatz in der Signaturumgebung, insbesondere auf dem Server, zur Verfügung gestellt ist, wobei die Signaturanwendung derart ausgebildet ist, dass die Anforderungsmitteilung insbesondere zumindest abschnittsweise außerhalb der Signaturumgebung übermittelt wird.

Zusätzlich oder alternativ kann die Signaturanwendung derart ausgebildet sein, dass dem wenigstens einen Empfänger eine Antwortmitteilung übermittelt wird, wobei die Antwortmitteilung insbesondere einen Link zum Zugriff auf den Antwortdatensatz ausgehend von einer weiteren Datenverarbeitungseinrichtung, insbesondere einer lokalen Datenverarbeitungseinrichtung, umfasst, wobei der Antwortdatensatz in der Signaturumgebung, insbesondere auf dem Server, zur Verfügung gestellt ist, wobei die Signaturanwendung derart ausgebildet ist, dass die Antwortmitteilung insbesondere zumindest abschnittsweise außerhalb der Signaturumgebung übermittelt wird.

Zusätzlich oder alternativ kann die Signaturanwendung derart ausgebildet sein, dass der erste Identifikationsschritt und/oder der zweite Identifikationsschritt unter Verwendung eines Online-Identifikationsmechanismus erfolgt.

Bei bestimmten Varianten ist der Server dazu ausgebildet, unter Verwendung wenigstens eines Teils der Signaturanwendung die elektronische Signatur des Signierers über dem elektronischen Dokument in der Signaturumgebung unter Verwendung eines Zertifikates zu erzeugen, das dem Signierer oder dem Signaturdienstanbieter zugeordnet ist. Dabei kann der Server dazu ausgebildet sein, unter Verwendung wenigstens eines Teils der Signaturanwendung für die elektronische Signatur des Signierers insbesondere ein Zertifikat des Signierers zu verwenden, das in der Signaturumgebung verfügbar ist, insbesondere in einer Datenbank des Servers gespeichert ist. Zusätzlich oder alternativ kann der Server dazu ausgebildet sein, unter Verwendung wenigstens eines Teils der Signaturanwendung für die elektronische Signatur des Signierers insbesondere ein Zertifikat des Signaturdienstanbieters zu verwenden, das in der Signaturumgebung verfügbar ist, insbesondere in einer Datenbank des Servers gespeichert ist.

Zusätzlich oder alternativ kann der Server dazu ausgebildet sein, unter Verwendung wenigstens eines Teils der Signaturanwendung für die elektronische Signatur des Signierers insbesondere auf eine dem Signierer zugeordnete externe Signaturinfrastruktur zuzugreifen, welche in die Signaturumgebung eingebunden ist und ein Zertifikat des Signierers umfasst, wobei externe Signaturinfrastruktur insbesondere dazu ausgebildet ist, die elektronische Signatur des Signierers auf Anforderung des Servers zu erzeugen. Es sei an dieser Stelle angemerkt, dass dieses Einbinden einer externen Signaturinfrastruktur einen Erfindungsgedanken darstellt, der gegebenenfalls eigenständig (d. h. insbesondere ohne die Vorgabe von Mindestsicherheitsstufen) schutzfähig ist.

Bei weiteren Varianten des Signatursystems ist wenigstens eine lokale Datenverarbeitungseinrichtung vorgesehen, die dem Initiator und/oder dem Signierer und/oder Empfänger zugeordnet ist, wobei die weitere Datenverarbeitungseinrichtung dazu ausgebildet ist, für den Zugang zu der Signaturumgebung zumindest einen Teil der Signaturanwendung zu verwenden. Dabei kann die Signaturanwendung ein erstes Signaturmodul und ein zweites Signaturmodul umfassen, wobei das erste Signaturmodul auf der lokalen Datenverarbeitungseinrichtung ausgeführt wird und dazu ausgebildet ist, insbesondere im Hintergrund, auf das zweite Signaturmodul zuzugreifen, welches auf dem entfernten Server des Signaturdienstanbieters ausgeführt wird. Zusätzlich oder alternativ kann die Signaturanwendung eine Komponente einer Onlinekonferenzanwendung sein, wobei die Signaturanwendung dazu ausgebildet ist, den Signaturvorgang zumindest teilweise, insbesondere vollständig, innerhalb einer Onlinekonferenzsitzung abzuwickeln.

Die vorliegende Erfindung betrifft schließlich einen Datenträger mit einer ausführbaren Signaturanwendung zur Durchführung eines erfindungsgemäßen Verfahrens auf wenigstens einer Datenverarbeitungseinrichtung.

Weitere Aspekte und Ausführungsbeispiele der Erfindung ergeben sich aus den abhängigen Ansprüchen und der nachfolgenden Beschreibung bevorzugter Ausführungsbeispiele, die sich auf die beigefügten Figuren bezieht. Alle Kombinationen der offenbarten Merkmale, unabhängig davon, ob diese Gegenstand eines Anspruchs sind oder nicht, liegen im Nutzbereich der Erfindung.

### KURZE BESCHREIBUNG DER ZEICHNUNGEN

- Figur 1: ist ein Ablaufdiagramm bevorzugten Ausführung des erfindungsgemäßen Verfahrens zum Signieren eines elektronischen Dokuments.
- Figur 2: ist ein Blockdiagramm einer bevorzugten Ausführung des erfindungsgemäßen Signatursystems mit dem das Verfahren aus Figur 1 durchgeführt werden kann.

### DETAILLIERTE BESCHREIBUNG DER ERFINDUNG

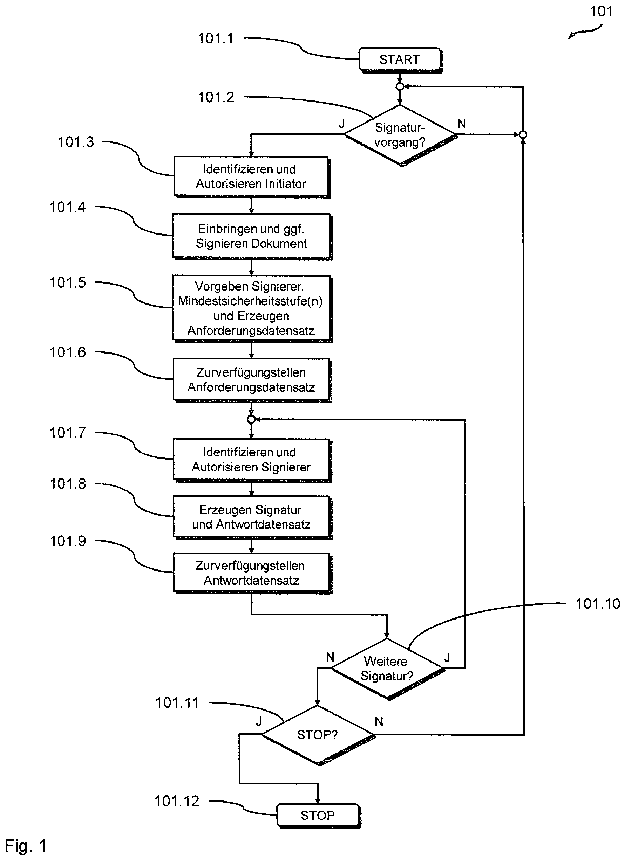

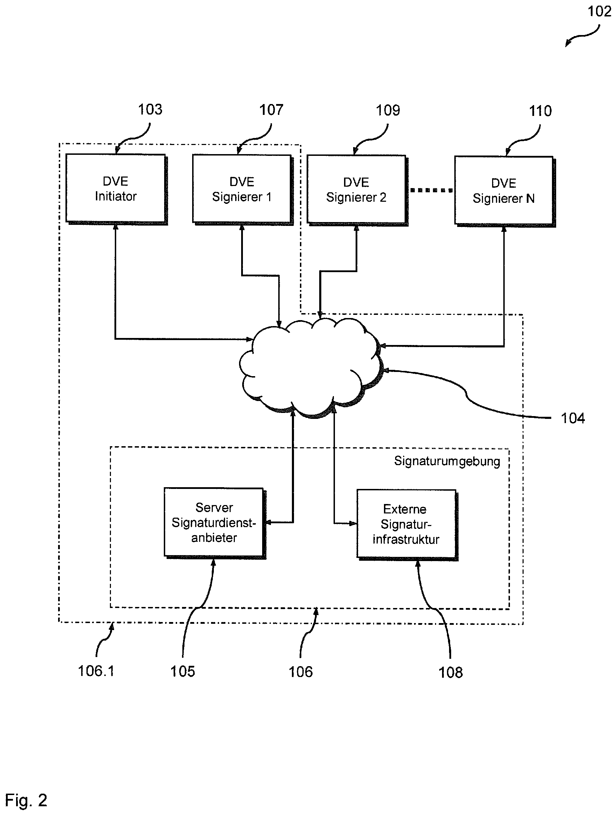

Im Folgenden wird unter Bezugnahme auf die Figuren 1 und 2 ein bevorzugtes Ausführungsbeispiel eines erfindungsgemäßen Verfahrens 101 zum Signieren eines elektronischen Dokuments, das mit den Signatursystem 102 aus Figur 2 durchgeführt werden kann.

Der Verfahrensablauf wird in einem Schritt 101.1 gestartet, bevor in einem Schritt 101.2 überprüft wird, ob eine Anforderung für einen Signaturvorgang vorliegt. Dies kann dadurch geschehen, dass ein Initiator des Signaturvorgangs über eine ihm zugeordnete Datenverarbeitungseinrichtung 103 über ein Netzwerk 104 (beispielsweise das Internet) auf ein Onlineportal eines Signaturdienstanbieters zugreift. Das Onlineportal wird durch eine Signaturanwendung zur Verfügung gestellt, die auf einem Server 105 des Signaturdienstanbieters ausgeführt wird.

Das Onlineportal bildet dabei den Zugang zu einer logischen sicheren Signaturumgebung 106, die von der Signaturanwendung durch entsprechende kryptographische Verfahren und Algorithmen hergestellt wird. Insbesondere wird die Kommunikation zwischen dem Server 105 und Datenverarbeitungseinrichtungen 103, 107 bis 110, die im Zuge des Zugriffs auf die Signaturumgebung 106 mit dem Server 105 kommunizieren, durch hinlänglich bekannte Mittel kryptographisch abgesichert.

Liegt eine Anforderung für einen Signaturvorgang durch einen Initiator vor, muss sich der Initiator in einem ersten Identifikationsschritt 101.3 zunächst über das Onlineportal gegenüber dem Signaturdienstanbieter identifizieren und autorisieren. Geschieht dies erstmalig für den Initiator, muss dieser im vorliegenden Beispiel in dem Identifikationsschritt 101.3 zunächst einen Online-Identifikationsmechanismus durchlaufen.

Zur Online-Identifikation können beliebige Mechanismen zur Anwendung kommen, welche online eine solche Identifizierung und Autorisierung eines Nutzers online ermöglichen. Insbesondere kann eine elektronische Identität des Initiators verwendet werden. Diese kann beispielsweise aus einem anderen Vertrag des Initiators mit einem Dienstanbieter stammen, über die eine Vertrauenskette zu dem Signaturdienstanbieter hergestellt werden kann. Insbesondere kann natürlich eine elektronische Identität verwendet werden, die aus einem anderen Vertrag mit dem Signaturdienstanbieter selbst stammt. Ebenso können natürlich (je nach Grad der Sicherheitsanforderungen) auch elektronische Identitäten aus sozialen Netzwerken oder dergleichen verwendet werden. Gleichermaßen kann natürlich auch ein elektronisches Ausweisdokument (beispielsweise ein digitaler Reisepass oder Personalausweis) mit entsprechender digitaler Identifikationsfunktion zur Identifikation und damit zum Herstellen einer Vertrauenskette zu dem Signaturdienstanbieter dienen. Schließlich kann eine elektronische Signaturkarte des Initiators verwendet werden, über welche eine solche Vertrauenskette hergestellt werden kann. In allen diesen Fällen ist ein schneller Zugang zu dem Signatursystem und damit eine Erhöhung der Akzeptanz und Durchsetzung solcher Signatursysteme im elektronischen Rechtsverkehr möglich.

Es versteht sich jedoch, dass bei anderen Varianten die jeweilige Identifikation und Autorisierung des Initiators gegenüber dem Signaturdienstanbieter vorab grundsätzlich auf beliebige andere geeignete Weise geschehen kann. Hier können beliebige geeignete Identifikationsmechanismen zum Einsatz kommen. Beispielsweise können herkömmliche Verfahren zum Einsatz kommen, bei denen sich der Teilnehmer gegenüber einer vertrauenswürdigen Person (beispielsweise eine Mitarbeiter einer vertrauenswürdigen Institution, wie einem Postdienstleister oder dergleichen) identifiziert und in einem nachfolgenden Prozess autorisiert wird.

In jedem Fall können dem Initiator mit dem Identifikationsmechanismus Zugangsdaten zugeordnet werden (beispielsweise ein Benutzername und ein Passwort), welche er beim nächsten Zugriff auf das Onlineportal verwenden kann. Solche Zugangsdaten können gegebenenfalls auch in der Datenverarbeitungseinheit 103 des Initiators entsprechend gesichert abgelegt sein, und gegebenenfalls automatisch beim nächsten Zugriff auf das Onlineportal ausgehend von der Datenverarbeitungseinheit 103 abgefragt und verarbeitet werden.

Hat der Initiator Zugang zu der Signaturfunktion des Onlineportals erlangt, kann er in einem Schritt 101.4 ein zu signierendes elektronisches Dokument D in die Signaturumgebung einbringen. Hierbei kann der Initiator ein bereits vorhandenes Dokument aus seiner Datenverarbeitungseinheit 103 auf den Server 105 und damit in die Signaturumgebung 106 laden. Ebenso kann der Initiator aber das Dokument D auch erst in der Signaturumgebung 106 durch eine entsprechende Anwendung generieren, die auf dem Server 105 innerhalb der sicheren Signaturumgebung 106 ausgeführt wird.

Grundsätzlich kann vorgesehen sein, dass der Initiator den Signaturvorgang initiiert, ohne selbst eine Signatur über dem Dokument D zu erzeugen. Im vorliegenden Beispiel ist jedoch vorgesehen, dass der Initiator als Initiatorsignatur SIGI eine qualifizierte elektronische Signatur (qeS) über dem elektronischen Dokument D erzeugt. Diese Signatur SIGI kann grundsätzlich auf beliebige geeignete Weise erzeugt werden. Insbesondere kann sie außerhalb der Signaturumgebung 106 erzeugt und in diese eingebracht worden sein.

Im vorliegenden Beispiel wird die Initiatorsignatur SIGI jedoch innerhalb der Signaturumgebung 106 durch die Signaturanwendung erzeugt. Hierzu verwendet der Server 105 ein dem Initiator zugeordnetes digitales Zertifikat, das in einer Zertifikatsdatenbank des Servers 105 abgelegt ist. Dieses dem Initiator zugeordnete digitale Zertifikat kann im Zuge der vorangehenden Online-Identifikation des Initiators (in Schritt 101.3) oder zu einem anderen Zeitpunkt vorab in die Zertifikatsdatenbank des Servers 105 eingebracht worden sein.

Der Initiator erzeugt weiterhin über das Onlineportal einen Anforderungsdatensatz ANF(D;SIGI;SANF1;SANF2;STAT), der im vorliegenden Beispiel das elektronische Dokument D, die Initiatorsignatur SIGI, eine erste Signaturanforderung SANF1, eine zweite Signaturanforderung SANF2 und eine Statusinformation STAT umfasst. Die erste Signaturanforderung SANF1 ist eine Anforderung für eine erste elektronische Signatur SIG1 eines ersten Signierers über dem elektronischen Dokument D. Die zweite Signaturanforderung SANF2 ist eine Anforderung für eine zweite elektronische Signatur SIG2 eines zweiten Signierers über dem elektronischen Dokument D.

Die jeweilige Signaturanforderung SANF1, SANF2 umfasst dabei für den jeweiligen Signierer eine durch den Initiator vorgebbare Signaturvorgabe, welche eine jeweilige Mindestsicherheitsstufe SLMIN1 bzw. SLMIN2 aus einer Mehrzahl unterschiedlicher Sicherheitsstufen SL definiert, welche die elektronische Signatur SIG1 bzw. SIG2 des jeweiligen Signierers über dem elektronischen Dokument D mindestens aufweisen muss.

Hiermit ist es für den Initiator möglich, unterschiedliche Sicherheitsstufen SLMIN1 bzw. SLMIN2 für die einzelnen Signaturen SIG1 bzw. SIG2 vorzugeben. So kann beispielsweise für den ersten Signierer eine sogenannte qualifizierte elektronische Signatur (qeS) als erstes Signatur SIG1 vorgegeben sein, während für den zweiten Signierer lediglich eine Signatur SIG2 mit einem niedrigeren Sicherheitsniveau SL vorgegeben sein kann. Insbesondere ist es auch möglich, für einen oder mehrere Signierer lediglich eine Lesebestätigung oder Empfangsbestätigung ohne Signatur vorzugeben. Gegebenenfalls kann die Mindestsicherheitsstufe SLMIN2 der zweiten elektronischen Signatur SIG2 daher gleich der Mindestsicherheitsstufe SLMIN1 der ersten elektronischen Signatur SIG1 sein oder davon abweichen.

Durch die Signaturvorgabe kann der Initiator in vorteilhafter Weise also bereits eine entsprechende Vorgabe hinsichtlich der aus seiner Sicht mindestens erforderlichen Sicherheitsstufe der jeweiligen angeforderten Signatur SIG1 bzw. SIG2 machen, welche dann automatisch ohne weiteren Eingriff bzw. weitere diesbezügliche Eingaben des Signieren verarbeitet werden kann. Hierdurch kann der Signaturprozess erheblich beschleunigt und vereinfacht werden. Dies ist in hohem Maße vorteilhaft für die Nutzerakzeptanz und Durchsetzung solcher Verfahren im Rechtsverkehr.

Der Initiator kann dabei selbst entscheiden, mit welcher Sicherheitsstufe SL er seine eigene Signatur SIGI erzeugt. Insbesondere muss diese nicht der angeforderten Sicherheitsstufe SLMIN1 bzw. SLMIN2 entsprechen. Bei weiteren Varianten kann die Sicherheitsstufe SLI der Initiatorsignatur SIGI die Mindestsicherheitsstufe SLMIN1 bzw. SLMIN2 definieren. Dies kann insbesondere dann gelten, wenn der Initiator keine abweichende Vorgabe hinsichtlich der Mindestsicherheitsstufe SLMIN1 bzw. SLMIN2 macht. Hiermit ist eine besonders schnelle und reibungslose Abwicklung möglich.

Die Statusinformation STAT gibt Aufschluss über den aktuellen Status des Signaturvorgangs. Die Statusinformation kann in einer Statusdatenbank des Servers 105 abgelegt werden und/oder an beliebige Empfänger, insbesondere den Initiator und/oder die vorgegebenen Signierer übermittelt werden. Hierdurch ist es möglich, die Historie des Signaturvorgangs nachzuvollziehen. Dies kann gegebenenfalls zumindest nahezu in Echtzeit erfolgen, wenn eine Aktualisierung der Statusinformation STAT jeweils unmittelbar zu relevanten Zeitpunkten erfolgt, zu denen eine Statusänderung eintritt.

In einem Schritt 101.6 wird der Anforderungsdatensatz ANF(D;SIGI;SANF1;SANF2;STAT) dann dem ersten Signierer zur Erzeugung der elektronischen Signatur SIG1 über dem elektronischen Dokument D zur Verfügung gestellt. Im vorliegenden Beispiel geschieht dies dadurch, dass der Anforderungsdatensatz ANF(D;SIGI;SANF1;SANF2;STAT) in dem Server 105 abgelegt wird und eine entsprechende erste Anforderungsmitteilung AM1 an den ersten Signierer übermittelt wird.

Die erste Anforderungsmitteilung AM1 kann grundsätzlich auf beliebige geeignete Weise übermittelt werden. Insbesondere kann vorgesehen sein, dass die Anforderungsmitteilung AM1 zumindest abschnittsweise außerhalb der Signaturumgebung übermittelt wird. Hiermit ist eine schnelle und einfache Benachrichtigung des ersten Signierers über beliebige Kommunikationskanäle (E-Mail, SMS, sonstige elektronische Mitteilungskanäle) möglich, ohne die Sicherheit zu beeinträchtigen.

Die Anforderungsmitteilung AM1 umfasst dabei einen Link L1 zum Zugriff auf den Anforderungsdatensatz ANF(D;SIGI;SANF1;SANF2;STAT), der in der Signaturumgebung 106 auf dem Server 105 zur Verfügung gestellt ist. Hiermit ist ein besonders schneller und einfacher Zugang des ersten Signierers zu der Signaturumgebung 106 möglich.

In einem Schritt 101.7 greift der erste Signierer dann in Reaktion auf die Anforderungsmitteilung AM1 unter Verwendung des Links L1 auf das Onlineportal zu. Hierbei muss sich auch der erste Signierer in einem zweiten Identifikationsschritt 101.7 zunächst über das Onlineportal gegenüber dem Signaturdienstanbieter identifizieren und autorisieren. Geschieht dies erstmalig für den erste Signierer, muss dieser im vorliegenden Beispiel in dem Identifikationsschritt 101.7 zunächst ebenfalls den oben im Zusammenhang mit dem ersten Identifikationsschritt 101.3 beschriebenen Online-Identifikationsmechanismus durchlaufen. Insofern wird diesbezüglich auf die obigen Ausführungen verwiesen.

Hat der erste Signierer Zugang zu der Signaturfunktion des Onlineportals erlangt, kann er in einem Schritt 101.4 seine digitale Signatur SIG1 über dem zu signierenden elektronischen Dokument D erzeugen. Grundsätzlich kann vorgesehen sein, dass der Signierer seine Signatur SIG1 auf beliebige geeignete Weise erzeugt, solange sie der Signaturvorgabe des Initiators entspricht. Insbesondere kann sie außerhalb der Signaturumgebung 106 erzeugt und in diese eingebracht werden.

Im vorliegenden Beispiel wird jedoch auch die erste Signatur SIG1 innerhalb der Signaturumgebung 106 durch die Signaturanwendung erzeugt. Hierzu greift der Server 105 unter Verwendung der Signaturanwendung allerdings auf eine dem ersten Signierer zugeordnete externe Signaturinfrastruktur 108 zu. Diese Signaturinfrastruktur 108 ist über die Signaturanwendung und eine entsprechende Vertrauenskette in die Signaturumgebung 106 eingebunden und hält ein digitales Zertifikat des ersten Signierers. Im vorliegenden Beispiel erzeugt die externe Signaturinfrastruktur 108 die elektronische Signatur SIG1 des ersten Signierers auf Anforderung des Servers 105 und übermittelt diese an den Server 105. Hiermit ist es in vorteilhafter Weise möglich, über den Signaturdienstanbieter beliebige bestehende Signaturinfrastrukturen 108 beliebiger Personen und/oder Institutionen in das System bzw. die sicheren Grenzen der Signaturumgebung 106 einzubinden, sofern eine entsprechende Vertrauenskette zwischen dem Signaturdienstanbieter und der externen Signaturinfrastruktur 108 hergestellt ist.

Der wenigstens eine Signierer erzeugt über das Onlineportal dann einen ersten positiven Antwortdatensatz ANT1(D;SIGI;SANF1;SIG1;SANF2;STAT), der neben den Komponenten des Anforderungsdatensatzes (also: D;SIGI;SANF1;SANF2;STAT) auch die erste Signatur SIG1 umfasst.

Grundsätzlich kann vorgesehen sein, dass der Signierer sich gegebenenfalls auch über die Vorgabe des Initiators hinwegsetzen kann, also auch einen Antwortdatensatz ohne Signatur oder mit einer Signatur SIG1 mit geringerer Sicherheitsstufe SL (als der vorgegebenen Mindestsicherheitsstufe SLMIN1) erzeugen kann.

Im vorliegenden Beispiel ist jedoch vorgesehen, dass der Signierer den positiven Antwortdatensatz ANT1(D;SIGI;SANF1;SIG1;SANF2;STAT) nur dann erzeugen kann, wenn über dem elektronischen Dokument D eine elektronische Signatur SIG1 gemäß der Signaturvorgabe SANF1 erzeugt wurde. Zusätzlich oder alternativ kann vorgesehen sein, dass der positive Antwortdatensatz ANT1(D;SIGI;SANF1;SIG1;SANF2;STAT) dem nächsten Empfänger nur dann zur Verfügung gestellt wird, wenn über dem Dokument D eine elektronische Signatur SIG1 gemäß der Signaturvorgabe SANF1 erzeugt wurde. Hiermit kann sichergestellt werden, dass unmittelbar erkennbar wird, dass der Signaturprozess fehlgeschlagen ist.

Im vorliegenden Beispiel ist vorgesehen, dass der Signierer einen negativen Antwortdatensatz ANT1N(D;SIGI;SANF1;NEG1;SANF2;STAT) erzeugt, wenn er die elektronische Signatur gemäß der Signaturvergabe verweigert, und der negative Antwortdatensatz ANT1N dem nächsten Empfänger in der oben beschriebenen Weise zur Verfügung gestellt wird. Dabei umfasst der negative Antwortdatensatz ANT1N das elektronische Dokument D. Hiermit lässt sich jeweils in einfacher Weise das Fehlschlagen des Signaturprozesses erkennen bzw. nachvollziehen. Dabei umfasst der negative Antwortdatensatz ANT1N(D;SIGI;SANF1;NEG1;SANF2;STAT) eine Begründungsinformation NEG1 für die Verweigerung der elektronischen Signatur SIG1 gemäß der Signaturvorgabe SANF1. Dies ist insbesondere für das weitere zielgerichtete Vorgehen nach dem Fehlschlagen des Signaturprozesses von Vorteil.

Wurde die Signatur jedoch nicht verweigert, wird der erste positive Antwortdatensatz ANT1(D;SIGI;SANF1;SIG1;SANF2;STAT) wird dann in einem Schritt 101.9 einem weiteren Empfänger (hier: dem zweiten Signierer) zur Verfügung gestellt. Dabei wird in einem Schritt 101.10 überprüft, ob eine weitere, noch nicht abgearbeitete Signaturvorgabe für den aktuellen Signaturvorgang vorliegt. Im vorliegenden Beispiel ist dies der Fall, da die zweite Signaturanforderung SANF2 noch nicht abgearbeitet ist.

Demgemäß wird im vorliegenden Beispiel analog zu dem Schritt 101.6 vorgegangen und eine entsprechende zweite Anforderungsmitteilung AM2 an den zweiten Signierer übermittelt. Die zweite Anforderungsmitteilung AM2 kann wie die erste Anforderungsmitteilung AM1 übermittelt werden. Insoweit wird auf die obigen Ausführungen verwiesen.

Auch die zweite Anforderungsmitteilung AM2 umfasst dabei einen Link L2 zum Zugriff auf den ersten Antwortdatensatz ANT1(D;SIGI;SANF1;SIG1;SANF2;STAT), der in der Signaturumgebung 106 auf dem Server 105 zur Verfügung gestellt ist. Hiermit ist ein besonders schneller und einfacher Zugang des zweiten Signierers über seine Datenverarbeitungseinrichtung 109 zu der Signaturumgebung 106 möglich. Es wird dann zurück zu dem Schritt 101.7 gesprungen und der Ablauf für den zweiten Signierer erneut durchlaufen. Insoweit wird auf die obigen Ausführungen verwiesen.

Hat auch der zweite Signierer seine Signatur SIG2 erstellt, erzeugt er über das Online-Portal einen positiven zweiten Antwortdatensatz ANT2(D;SIGI;SANF1;SIG1;SANF2; SIG1;STAT), der neben den neben den Komponenten des positiven ersten Antwortdatensatzes ANT1(also: D;SIGI;SANF1;SANF2;STAT) auch die zweite Signatur SIG2 umfasst. Hinsichtlich einer Verweigerung der zweiten Signatur wird analog vorgegangen.

Wurde auch die zweite Signatur SIG2 nicht verweigert, wird der zweite positive Antwortdatensatz ANT2(D;SIGI;SANF1;SIG1;SANF2;SIG2;STAT) dann in einem erneuten Durchlauf des Schritts 101.9 einem weiteren Empfänger zur Verfügung gestellt. Dabei wird in einem Schritt 101.10 überprüft, ob eine weitere, noch nicht abgearbeitete Signaturvorgabe für den aktuellen Signaturvorgang vorliegt. Ist dies nicht der Fall, sind also alle Signaturvorgaben des Initiators abgearbeitet, wird der Antwortdatensatz im vorliegenden Beispiel an alle Beteiligten, d. h. dem Initiator und den beiden Signierern zur Verfügung gestellt. Auch hier erfolgt die Kommunikation über entsprechende Mitteilung analog zu der oben beschriebenen Weise.

In einem Schritt 101.11 wird dann überprüft, ob der Verfahrensablauf beendet werden soll ist dies der Fall, geschieht dies in einem Schritt 101.12. Andernfalls wird zum Schritt 101.2 zurückgesprungen.

Es versteht sich, dass über den Ablauf des Signaturvorgangs eine Aktualisierung der Statusinformation STAT jeweils zu Zeitpunkten erfolgen kann, zu denen eine (insbesondere rechtlich) relevante Statusänderung eintritt. Die Statusinformation STAT kann während oder nach einem Erstellen einer elektronischen Signatur SIGI, SIG1, SIG2 über dem elektronischen Dokument D an die Statusdatenbank und/oder die Beteiligten Parteien übermittelt und damit aktualisiert werden. Ebenfalls kann die Statusinformation während oder nach dem Zurverfügungstellen des Anforderungsdatensatzes ANF und/oder des jeweiligen (positiven oder negativen) Antwortdatensatzes ANT1, ANT2; ANT1N, ANT2N übermittelt und damit aktualisiert werden. In allen diesen Fällen ist in vorteilhafter Weise sichergestellt, dass relevante Statusänderungen nachvollziehbar sind.

Mit dem vorstehend beschriebenen Verfahren 101 ist es in einfacher Weise möglich, auf schnellem Wege mehrere (gegebenenfalls rechtsverbindliche) Signaturen von mehr als zwei Parteien über einem elektronischen Dokument D anzufordern und zu erhalten. Es versteht sich, dass dabei beliebig viele Parteien eingebunden werden können, die dann über ihre jeweiligen Datenverarbeitungseinrichtungen 103, 107 bis 110 auf den Server 105 zugreifen.

Insbesondere ist es hiermit für den Initiator möglich, unterschiedliche Sicherheitsstufen für die einzelnen Signaturen vorzugeben. So kann beispielsweise für den ersten Signierer eine sogenannte qualifizierte elektronische Signatur (qeS) als erste Signatur SIG1 vorgegeben sein, während für den zweiten Signierer lediglich eine Signatur SIG2 mit einem niedrigeren Sicherheitsniveau vorgegeben sein kann. Insbesondere ist es auch möglich, für einen oder mehrere Signierer lediglich eine Lesebestätigung oder Empfangsbestätigung ohne Signatur vorzugeben.

Gegebenenfalls ist es aber auch möglich, dass einer der Signierer, beispielsweise der erste Signierer, weitere Signaturen SIGN über diejenigen (SIG1, SIG2) hinaus anfordert, die von dem Initiator angefordert wurden, wobei dieser Signierer dann gegebenenfalls selbst die Mindestsignaturstufe für diese zusätzlichen Signaturen vorgeben kann. Hierbei kann jedoch gegebenenfalls vorgesehen sein, dass die zusätzlichen Signaturen nicht unterhalb der von dem Initiator angeforderten Mindestsignaturstufe liegen.

Es versteht sich, dass in der sicheren Signaturumgebung 106 vorzugsweise zumindest ein Großteil der sicherheitsrelevanten Vorgänge abgewickelt wird. Derartige sichere Umgebungen sind hinlänglich bekannt und beruhen typischerweise auf entsprechend starken kryptographischen Systemen bzw. Algorithmen, welche die sichere Umgebung vor unautorisierten und/oder unerkanntem Zugriff durch Dritte sichern. Es versteht sich dabei, dass eine sichere Umgebung über die Grenzen mehrerer Datenverarbeitungseinrichtungen (im vorliegenden Beispiel: der Server 105 und die externe Signaturinfrastruktur 108) hinweg in hinlänglich bekannter Weise durch eine entsprechend starke kryptographische Absicherung, beispielsweise eine entsprechende Verschlüsselung der Kommunikationskanäle zwischen den Datenverarbeitungseinrichtungen abgesichert werden kann. Derartige Sicherungsmechanismen sind wie erwähnt hinlänglich bekannt.

Bei bestimmten Varianten kann auch vorgesehen sein, dass für die elektronische Signatur eines Signierers ein Zertifikat des Signaturdienstanbieters verwendet wird, das in der Signaturumgebung 106 verfügbar ist, insbesondere in einer Datenbank des Servers 105 gespeichert ist. Mithin kann also eine sogenannte intermediäre Signatur verwendet werden, mit welcher der Signaturdienstanbieter das Dokument D mit seiner Signatur versieht. Hiermit kann gegebenenfalls über den Signaturdienstanbieter eine Vertrauenskette zwischen dem Initiator und dem Signierer geschlossen werden, sofern ein entsprechendes Vertrauensverhältnis zwischen dem Signierer und dem Signaturdienstanbieter besteht.

Während vorstehend ausschließlich eine Variante mit einem Onlineportal beschrieben wurde, versteht es sich, dass bei anderen Varianten auch vorgesehen sein kann, dass die Signaturanwendung ein erstes Signaturmodul und ein zweites Signaturmodul umfasst, wobei das erste Signaturmodul auf der lokalen Datenverarbeitungseinrichtung 103,107 bis 110 ausgeführt wird und nur im Hintergrund, auf das zweite Signaturmodul zugreift, welches auf dem entfernten Server 105 des Signaturdienstanbieters ausgeführt wird. Hiermit ist es insbesondere in einfacher Weise möglich, das Signatursystem im Hintergrund in bestehende Prozesse bzw. Infrastrukturen eines Inhabers der lokalen Datenverarbeitungseinrichtung 103, 107 bis 110 einzubinden. Zudem könnte die sichere Signaturumgebung 106 hiermit in besonders einfacher Weise auf einzelne oder alle dieser Datenverarbeitungseinrichtungen 103, 107 bis 110 ausgeweitet werden, wie dies in Figur 2 durch die Kontur 106.1 (für die Datenverarbeitungseinrichtungen 103 und 107) angedeutet ist.

Die im Zuge der Abwicklung des Signaturvorgangs stattfindende Kommunikation kann grundsätzlich über beliebige Kommunikationskanäle erfolgen. Wie beschrieben kann gegebenenfalls ein Teil der Kommunikation außerhalb der sicheren Signaturumgebung 106 erfolgen. Dabei muss das zu signierende Dokument D und/oder der jeweils zugehörige Anforderungsdatensatz ANF und/oder Antwortdatensatz ANT1, ANT2 die sichere Signaturumgebung 106 gegebenenfalls nicht verlassen.

Besonders vorteilhaft lässt sich die Erfindung aber auch im Zusammenhang mit sogenannten Onlinekonferenzen anwenden. Hierbei können beispielsweise die Teilnehmer an einer Onlinekonferenz innerhalb der Onlinekonferenz ein hochgeladenes und/oder gemeinsam bearbeitetes Dokument auf Initiative eines der Teilnehmer (des Initiators) online in der beschriebenen Weise mit entsprechenden digitalen Signaturen SIGI, SIG1, SIG2 versehen. Die Signaturanwendung ist in diesem Fall vorzugsweise eine Komponente einer Onlinekonferenzanwendung, wobei der Signaturvorgang dann zumindest teilweise, insbesondere vollständig, innerhalb einer Onlinekonferenzsitzung abgewickelt wird. Die Onlinekonferenzanwendung kann dann ebenfalls wie das oben beschriebene Onlineportal auf dem Server 105 ausgeführt werden.

Die vorliegende Erfindung wurde vorstehend schließlich anhand konkreter Ausführungsbeispiele beschrieben, welche konkrete Kombinationen der in den nachfolgenden Patentansprüchen definierten Merkmale zeigt. Es sei an dieser Stelle ausdrücklich darauf hingewiesen, dass der Gegenstand der vorliegenden Erfindung nicht auf diese Merkmalskombinationen beschränkt ist, sondern auch sämtliche übrigen Merkmalskombinationen, wie sie sich aus den nachfolgenden Patentansprüchen ergeben, zum Gegenstand der vorliegenden Erfindung gehören.

## Patentansprüche

1. Verfahren zum elektronischen Signieren eines elektronischen Dokuments, bei dem
- ein Initiator (103) eines Signaturvorgangs einen Anforderungsdatensatz erzeugt, der das elektronische Dokument und eine Signaturanforderung umfasst, wobei die Signaturanforderung eine Anforderung einer elektronischen Signatur wenigstens eines Signierers über wenigstens dem elektronischen Dokument umfasst (101.5),
- der Anforderungsdatensatz dem wenigstens einen Signierer zur Erzeugung der elektronischen Signatur zumindest über dem elektronischen Dokument zur Verfügung gestellt wird (101.6),
- der wenigstens eine Signierer zumindest über dem elektronischen Dokument eine elektronische Signatur erzeugt und einen positiven Antwortdatensatz erzeugt, der zumindest das elektronische Dokument und die elektronische Signatur umfasst (101.8), und
- der positive Antwortdatensatz wenigstens einem Empfänger, insbesondere dem Initiator, zur Verfügung gestellt wird (101.9), wobei
- für die elektronische Signatur wenigstens zwei Signaturstufen mit unterschiedlichen Sicherheitsstufen der elektronischen Signatur vorgegeben sind und
- die Signaturanforderung eine durch den Initiator vorgebbare Signaturvorgabe umfasst, welche eine Mindestsicherheitsstufe definiert, welche die elektronische Signatur des wenigstens einen Signierers über dem elektronischen Dokument mindestens aufweisen muss, wobei
- der Initiator als Initiatorsignatur eine elektronische Signatur über dem elektronischen Dokument erzeugt und der Anforderungsdatensatz die Initiatorsignatur umfasst, wobei
- eine Sicherheitsstufe der Initiatorsignatur die Mindestsicherheitsstufe definiert.

2. Verfahren nach Anspruch 1, wobei
- der wenigstens eine Signierer den positiven Antwortdatensatz nur erzeugen kann, wenn über dem elektronischen Dokument eine elektronische Signatur des wenigstens einen Signierers gemäß der Signaturvorgabe erzeugt wurde, und/oder
- der positive Antwortdatensatz dem Empfänger nur zur Verfügung gestellt wird, wenn über dem elektronischen Dokument eine elektronische Signatur des wenigstens einen Signierers gemäß der Signaturvorgabe erzeugt wurde.

3. Verfahren nach Anspruch 1 oder 2, wobei
- der wenigstens eine Signierer einen negativen Antwortdatensatz erzeugt, wenn er die elektronische Signatur gemäß der Signaturvergabe verweigert, und
- der negative Antwortdatensatz dem Empfänger zur Verfügung gestellt wird,
wobei
- der negative Antwortdatensatz zumindest einen Hinweis auf den Anforderungsdatensatz umfasst, insbesondere eine Identifikation des Anforderungsdatensatzes umfasst,
und/oder
- der negative Antwortdatensatz das elektronische Dokument umfasst und/oder
- der negative Antwortdatensatz eine Begründungsinformation für die Verweigerung der elektronischen Signatur gemäß der Signaturvorgabe umfasst.

4. Verfahren nach einem der Ansprüche 1 bis 3, wobei
- die Sicherheitsstufe der Initiatorsignatur die Mindestsicherheitsstufe definiert, sofern der Initiator keine abweichende Vorgabe hinsichtlich der Mindestsicherheitsstufe macht.

5. Verfahren nach einem der Ansprüche 1 bis 4, wobei
- der wenigstens eine Signierer ein erster Signierer ist, die Anforderung der elektronischen Signatur des ersten Signierers in dem Anforderungsdatensatz eine erste Anforderung einer ersten elektronischen Signatur ist und der Antwortdatensatz ein erster Antwortdatensatz ist,
- der Initiator dem Anforderungsdatensatz und/oder der erste Signierer dem ersten Antwortdatensatz eine zweite Anforderung einer zweiten elektronischen Signatur eines zweiten Signierers über wenigstens dem elektronischen Dokument beigefügt,
- der erste Antwortdatensatz dem zweiten Signierer zur Erzeugung der zweiten elektronischen Signatur zumindest über dem elektronischen Dokument zur Verfügung gestellt wird,
- der zweite Signierer zumindest über dem elektronischen Dokument die zweite elektronische Signatur erzeugt und einen zweiten Antwortdatensatz erzeugt, der zumindest das elektronische Dokument und die zweite elektronische Signatur sowie insbesondere die erste elektronische Signatur umfasst, und
- der zweite Antwortdatensatz wenigstens einem Empfänger, insbesondere dem Initiator, zur Verfügung gestellt wird,
wobei
- die zweite Anforderung insbesondere eine vorgebbare zweite Signaturvorgabe umfasst, welche eine Mindestsicherheitsstufe definiert, welche die zweite elektronische Signatur des zweiten Signierers über dem elektronischen Dokument mindestens aufweisen muss,
- die Mindestsicherheitsstufe der zweiten elektronischen Signatur insbesondere gleich der Mindestsicherheitsstufe der ersten elektronischen Signatur ist oder von der Mindestsicherheitsstufe der ersten elektronischen Signatur abweicht.

6. Verfahren nach einem der Ansprüche 1 bis 5, wobei
- eine Statusinformation über einen Status des Signaturvorgangs erzeugt und an einen Empfänger, insbesondere an den Initiator und/oder eine Statusdatenbank, übermittelt wird,
wobei
- der Antwortdatensatz und/oder der Anforderungsdatensatz die Statusinformation umfasst
und/oder
- die Statusinformation insbesondere während oder nach einem Erstellen einer elektronischen Signatur über dem elektronischen Dokument aktualisiert wird
und/oder
- die Statusinformation insbesondere während oder nach einem Erstellen einer elektronischen Signatur übermittelt wird
und/oder
- die Statusinformation insbesondere während oder nach dem Zurverfügungstellen des Antwortdatensatzes übermittelt wird
und/oder
- die Statusinformation insbesondere eine Begründungsinformation für eine Verweigerung der elektronischen Signatur umfasst.

7. Verfahren nach einem der Ansprüche 1 bis 6, wobei
- ein Signaturdienstanbieter eine sichere Signaturumgebung zur Verfügung stellt,
- der Initiator sich in einem ersten Identifikationsschritt des Signaturvorgangs gegenüber dem Signaturdienstanbieter zum Zugriff auf die Signaturumgebung identifiziert und autorisiert,
- der Initiator in einem dem ersten Identifikationsschritt nachfolgenden Schritt des Signaturvorgangs das elektronische Dokument in die sichere Umgebung einbringt und innerhalb der Signaturumgebung den Anforderungsdatensatz erzeugt,
- der wenigstens eine Signierer sich in einem zweiten Identifikationsschritt gegenüber dem Signaturdienstanbieter zum Zugriff auf die Signaturumgebung identifiziert und autorisiert und
- der wenigstens eine Signierer in einem dem zweiten Identifikationsschritt nachfolgenden Schritt des Signaturvorgangs in der Signaturumgebung die elektronische Signatur über dem elektronischen Dokument und den Antwortdatensatz erzeugt,
wobei
- der Anforderungsdatensatz dem wenigstens einen Signierer und/oder der Antwortdatensatz dem wenigstens einen Empfänger insbesondere innerhalb der Signaturumgebung zur Verfügung gestellt wird
und/oder
- dem wenigstens einen Signierer eine Anforderungsmitteilung übermittelt wird, wobei die Anforderungsmitteilung insbesondere einen Link zum Zugriff auf den Anforderungsdatensatz umfasst, der in der Signaturumgebung zur Verfügung gestellt ist, wobei die Anforderungsmitteilung insbesondere zumindest abschnittsweise außerhalb der Signaturumgebung übermittelt wird, und/oder
- dem wenigstens einen Empfänger eine Antwortmitteilung übermittelt wird, wobei die Antwortmitteilung insbesondere einen Link zum Zugriff auf den Antwortdatensatz umfasst, der in der Signaturumgebung zur Verfügung gestellt ist, wobei die Antwortmitteilung insbesondere zumindest abschnittsweise außerhalb der Signaturumgebung übermittelt wird.

8. Verfahren nach Anspruch 7, wobei
- der Signaturdienstanbieter die elektronische Signatur des Signierers über dem elektronischen Dokument in der Signaturumgebung unter Verwendung eines Zertifikates erzeugt, das dem Signierer oder dem Signaturdienstanbieter zugeordnet ist,
wobei
- für die elektronische Signatur des Signierers insbesondere ein Zertifikat des Signierers verwendet wird, das in der Signaturumgebung verfügbar ist, insbesondere in einer Datenbank des Signaturanbieters gespeichert ist,
und/oder
- für die elektronische Signatur des Signierers insbesondere ein Zertifikat des Signaturdienstanbieters verwendet wird, das in der Signaturumgebung verfügbar ist, insbesondere in einer Datenbank des Signaturanbieters gespeichert ist,
und/oder
- der Signaturdienstanbieter für die elektronische Signatur des Signierers insbesondere auf eine dem Signierer zugeordnete externe Signaturinfrastruktur zugreift, welche in die Signaturumgebung eingebunden wird und ein Zertifikat des Signierers umfasst, wobei die elektronische Signatur des Signierers insbesondere auf Anforderung des Signaturdienstanbieters durch die externe Signaturinfrastruktur erzeugt wird.

9. Verfahren nach Anspruch 7 oder 8, wobei
- der erste Identifikationsschritt und/oder der zweite Identifikationsschritt unter Verwendung eines Online-Identifikationsmechanismus erfolgt,
wobei
- insbesondere eine elektronische Identität und/oder ein elektronisches Ausweisdokument und/oder eine elektronische Signaturkarte des Initiators und/oder des Signierers verwendet wird.

10. Verfahren nach einem der Ansprüche 7 bis 9, wobei
- der Initiator und/oder der Signierer und/oder der Empfänger für den Zugang zu der Signaturumgebung eine Signaturanwendung verwendet, die zumindest teilweise auf einer lokalen Datenverarbeitungseinrichtung ausgeführt wird und/oder zumindest teilweise auf einem entfernten Server des Signaturdienstanbieters ausgeführt wird,
wobei
- die Signaturanwendung insbesondere ein erstes Signaturmodul und ein zweites Signaturmodul umfasst, wobei das erste Signaturmodul auf der lokalen Datenverarbeitungseinrichtung ausgeführt wird und, insbesondere im Hintergrund, auf das zweite Signaturmodul zugreift, welches auf dem entfernten Server des Signaturdienstanbieters ausgeführt wird,
und/oder
- die Signaturanwendung insbesondere eine Komponente einer Onlinekonferenzanwendung ist, wobei der Signaturvorgang zumindest teilweise, insbesondere vollständig, innerhalb einer Onlinekonferenzsitzung abgewickelt wird.

11. Signatursystem zum elektronischen Signieren eines elektronischen Dokuments, insbesondere zur Durchführung eines Verfahrens nach einem der Ansprüche 1 bis 10, umfassend
- wenigstens eine Datenverarbeitungseinrichtung zum Ausführen zumindest eines Teils einer Signaturanwendung, wobei
- die Signaturanwendung derart ausgebildet ist, dass ein Initiator (103) eines Signaturvorgangs einen Anforderungsdatensatz erzeugt, der das elektronische Dokument und eine Signaturanforderung umfasst, wobei die Signaturanforderung eine Anforderung einer elektronischen Signatur wenigstens eines Signierers (107, 109, 110) über wenigstens dem elektronischen Dokument umfasst,
- die Signaturanwendung derart ausgebildet ist, dass der Anforderungsdatensatz dem wenigstens einen Signierer zur Erzeugung der elektronischen Signatur zumindest über dem elektronischen Dokument zur Verfügung gestellt wird,
- die Signaturanwendung derart ausgebildet ist, dass der wenigstens eine Signierer zumindest über dem elektronischen Dokument eine elektronische Signatur erzeugt und einen positiven Antwortdatensatz erzeugt, der zumindest das elektronische Dokument und die elektronische Signatur umfasst, und
- die Signaturanwendung derart ausgebildet ist, dass der positive Antwortdatensatz wenigstens einem Empfänger, insbesondere dem Initiator, zur Verfügung gestellt wird,
wobei
- für die elektronische Signatur wenigstens zwei Signaturstufen mit unterschiedlichen Sicherheitsstufen der elektronischen Signatur vorgegeben sind und
- die Signaturanwendung derart ausgebildet ist, dass die Signaturanforderung eine durch den Initiator vorgebbare Signaturvorgabe umfasst, welche eine Mindestsicherheitsstufe definiert, welche die elektronische Signatur des wenigstens einen Signierers über dem elektronischen Dokument mindestens aufweisen muss.
- die Signaturanwendung derart ausgebildet ist, dass der Initiator als Initiatorsignatur eine elektronische Signatur über dem elektronischen Dokument erzeugt und der Anforderungsdatensatz die Initiatorsignatur umfasst, wobei
- eine Sicherheitsstufe der Initiatorsignatur die Mindestsicherheitsstufe definiert.

12. Signatursystem nach Anspruch 11, wobei
- die Signaturanwendung derart ausgebildet ist, dass der wenigstens eine Signierer den positiven Antwortdatensatz nur erzeugen kann, wenn über dem elektronischen Dokument eine elektronische Signatur des wenigstens einen Signierers gemäß der Signaturvorgabe erzeugt wurde,
und/oder
- die Signaturanwendung derart ausgebildet ist, dass der positive Antwortdatensatz dem Empfänger nur zur Verfügung gestellt wird, wenn über dem elektronischen Dokument eine elektronische Signatur des wenigstens einen Signierers gemäß der Signaturvorgabe erzeugt wurde,
und/oder
- die Signaturanwendung derart ausgebildet ist, dass der wenigstens eine Signierer einen negativen Antwortdatensatz erzeugt, wenn er die elektronische Signatur gemäß der Signaturvergabe verweigert, und der negative Antwortdatensatz dem Empfänger zur Verfügung gestellt wird,
und/oder
- die Signaturanwendung derart ausgebildet ist, dass eine Statusinformation über einen Status des Signaturvorgangs erzeugt und an einen Empfänger übermittelt wird, insbesondere an den Initiator und/oder eine Statusdatenbank, die in der wenigstens einen Datenverarbeitungseinrichtung gehalten wird.

13. Signatursystem nach Anspruch 11 oder 12, wobei
- die wenigstens eine Datenverarbeitungseinrichtung ein Server eines Signaturdienstanbieters ist, und zumindest ein Teil der Signaturanwendung auf dem Server ausgeführt wird, um eine sichere Signaturumgebung zur Verfügung zu stellen,
- die Signaturanwendung derart ausgebildet ist, dass der Initiator sich in einem ersten Identifikationsschritt des Signaturvorgangs gegenüber dem Signaturdienstanbieter zum Zugriff auf die Signaturumgebung identifiziert und autorisiert,
- die Signaturanwendung derart ausgebildet ist, dass der Initiator in einem dem ersten Identifikationsschritt nachfolgenden Schritt des Signaturvorgangs das elektronische Dokument in die sichere Umgebung einbringt und innerhalb der Signaturumgebung, insbesondere auf dem Server, den Anforderungsdatensatz erzeugt,
- die Signaturanwendung derart ausgebildet ist, dass der wenigstens eine Signierer sich in einem zweiten Identifikationsschritt gegenüber dem Signaturdienstanbieter zum Zugriff auf die Signaturumgebung identifiziert und autorisiert, und
- die Signaturanwendung derart ausgebildet ist, dass der wenigstens eine Signierer in einem dem zweiten Identifikationsschritt nachfolgenden Schritt des Signaturvorgangs in der Signaturumgebung die elektronische Signatur über dem elektronischen Dokument und den Antwortdatensatz erzeugt,
wobei
- die Signaturanwendung derart ausgebildet ist, dass der Anforderungsdatensatz dem wenigstens einen Signierer und/oder der Antwortdatensatz dem wenigstens einen Empfänger insbesondere innerhalb der Signaturumgebung, insbesondere auf dem Server, zur Verfügung gestellt wird,
und/oder
- die Signaturanwendung derart ausgebildet ist, dass dem wenigstens einen Signierer eine Anforderungsmitteilung übermittelt wird, wobei die Anforderungsmitteilung insbesondere einen Link zum Zugriff auf den Anforderungsdatensatz ausgehend von einer weiteren Datenverarbeitungseinrichtung, insbesondere einer lokalen Datenverarbeitungseinrichtung, umfasst, wobei der Anforderungsdatensatz in der Signaturumgebung, insbesondere auf dem Server, zur Verfügung gestellt ist, wobei die Signaturanwendung derart ausgebildet ist, dass die Anforderungsmitteilung insbesondere zumindest abschnittsweise außerhalb der Signaturumgebung übermittelt wird,
und/oder
- die Signaturanwendung derart ausgebildet ist, dass dem wenigstens einen Empfänger eine Antwortmitteilung übermittelt wird, wobei die Antwortmitteilung insbesondere einen Link zum Zugriff auf den Antwortdatensatz ausgehend von einer weiteren Datenverarbeitungseinrichtung, insbesondere einer lokalen Datenverarbeitungseinrichtung, umfasst, wobei der Antwortdatensatz in der Signaturumgebung, insbesondere auf dem Server, zur Verfügung gestellt ist, wobei die Signaturanwendung derart ausgebildet ist, dass die Antwortmitteilung insbesondere zumindest abschnittsweise außerhalb der Signaturumgebung übermittelt wird,
und/oder
- die Signaturanwendung derart ausgebildet ist, dass der erste Identifikationsschritt und/oder der zweite Identifikationsschritt unter Verwendung eines Online-Identifikationsmechanismus erfolgt.

14. Signatursystem nach Anspruch 13, wobei
- der Server dazu ausgebildet ist, unter Verwendung wenigstens eines Teils der Signaturanwendung die elektronische Signatur des Signierers über dem elektronischen Dokument in der Signaturumgebung unter Verwendung eines Zertifikates zu erzeugen, das dem Signierer oder dem Signaturdienstanbieter zugeordnet ist,
wobei
- der Server dazu ausgebildet ist, unter Verwendung wenigstens eines Teils der Signaturanwendung für die elektronische Signatur des Signierers insbesondere ein Zertifikat des Signierers zu verwenden, das in der Signaturumgebung verfügbar ist, insbesondere in einer Datenbank des Servers gespeichert ist,
und/oder
- der Server dazu ausgebildet ist, unter Verwendung wenigstens eines Teils der Signaturanwendung für die elektronische Signatur des Signierers insbesondere ein Zertifikat des Signaturdienstanbieters zu verwenden, das in der Signaturumgebung verfügbar ist, insbesondere in einer Datenbank des Servers gespeichert ist,
und/oder
- der Server dazu ausgebildet ist, unter Verwendung wenigstens eines Teils der Signaturanwendung für die elektronische Signatur des Signierers insbesondere auf eine dem Signierer zugeordnete externe Signaturinfrastruktur zuzugreifen, welche in die Signaturumgebung eingebunden ist und ein Zertifikat des Signierers umfasst, wobei externe Signaturinfrastruktur insbesondere dazu ausgebildet ist, die elektronische Signatur des Signierers auf Anforderung des Servers zu erzeugen.

15. Signatursystem nach Anspruch 13 oder 14, wobei
- wenigstens eine lokale Datenverarbeitungseinrichtung vorgesehen ist, die dem Initiator und/oder dem Signierer und/oder Empfänger zugeordnet ist, wobei die weitere Datenverarbeitungseinrichtung dazu ausgebildet ist, für den Zugang zu der Signaturumgebung zumindest einen Teil der Signaturanwendung zu verwenden,
wobei
- die Signaturanwendung insbesondere ein erstes Signaturmodul und ein zweites Signaturmodul umfasst, wobei das erste Signaturmodul auf der lokalen Datenverarbeitungseinrichtung ausgeführt wird und dazu ausgebildet ist, insbesondere im Hintergrund, auf das zweite Signaturmodul zuzugreifen, welches auf dem entfernten Server des Signaturdienstanbieters ausgeführt wird,
und/oder
- die Signaturanwendung insbesondere eine Komponente einer Onlinekonferenzanwendung ist, wobei die Signaturanwendung dazu ausgebildet ist, den Signaturvorgang zumindest teilweise, insbesondere vollständig, innerhalb einer Onlinekonferenzsitzung abzuwickeln.

16. Datenträger mit einer ausführbaren Signaturanwendung zur Durchführung eines Verfahrens nach einem der Ansprüche 1 bis 10, auf wenigstens einer Datenverarbeitungseinrichtung.

## Claims

1. A method for electronically signing an electronic document, in which
- an initiator (103) of a signature process generates a request data set that includes the electronic document and a signature request, the signature request including a request for an electronic signature of at least one signer over at least the electronic document (105.1),
- the request data set is made available to the at least one signer for generating the electronic signature over at least the electronic document (101.6),
- the at least one signer generates an electronic signature over at least the electronic document and generates a positive response data set which includes at least the electronic document and the electronic signature (101.8), and
- the positive response data set is made available to at least one recipient, in particular, the initiator, (101.9),
wherein
- at least two signature levels with different security levels of the electronic signature are specified for the electronic signature, and
- the signature request comprises a signature specification that can be specified by the initiator and that defines a minimum security level which the electronic signature of the at least one signer over the electronic document must at least have, wherein
- the initiator generates, as an initiator signature, an electronic signature over the electronic document and the request data set includes the initiator signature, wherein
- a security level of the initiator signature defines the minimum security level.

2. The method of claim 1 wherein
- the at least one signer can only generate the positive response data set if an electronic signature of the at least one signer has been generated over the electronic document in accordance with the signature specification,
and/or
- the positive response data set is only made available to the recipient if an electronic signature of the at least one signer has been generated over the electronic document in accordance with the signature specification.

3. The method of claim 1 or 2, wherein
- the at least one signer generates a negative response data set if he refuses the electronic signature in accordance with the signature specification, and
- the negative response data set is made available to the recipient,
wherein
- the negative response data set includes at least one reference to the request data set, in particular includes an identification of the request data set,
and/or
- the negative response data set comprises the electronic document,
and/or
- the negative response data set includes justification information for the refusal of the electronic signature in accordance with the signature specification.

4. The method according to any one of claims 1 to 3, wherein
- the security level of the initiator signature defines the minimum security level if the initiator does not make any deviating specifications regarding the minimum security level.

5. The method according to any one of claims 1 to 4, wherein
- the at least one signer is a first signer, the request for the electronic signature of the first signer in the request data set is a first request for a first electronic signature and the response data set is a first response data set,
- the initiator adds to the request data set and/or the first signer adds to the first response data set a second request for a second electronic signature of a second signer over at least the electronic document,
- the first response data set is made available to the second signer for generating the second electronic signature over at least the electronic document,
- the second signer generates the second electronic signature over at least the electronic document and generates a second response data set which comprises at least the electronic document and the second electronic signature and, in particular, the first electronic signature, and
- the second response data set is made available to at least one recipient, in particular the initiator,
wherein
- the second request, in particular, comprises a predeterminable second signature specification which defines a minimum security level which the second electronic signature of the second signer over the electronic document must have at least,
- the minimum security level of the second electronic signature, in particular, is the same as the minimum security level of the first electronic signature or deviates from the minimum security level of the first electronic signature.

6. A method according to any one of claims 1 to 5, wherein
- status information about a status of the signature process is generated and transmitted to a recipient, in particular to the initiator and/or to a status database,
wherein
- the response data set and/or the request data set comprises the status information,
and/or
- the status information is updated, in particular, during or after the creation of an electronic signature over the electronic document,
and/or
- the status information is transmitted, in particular, during or after the creation of an electronic signature,
and/or
- the status information is transmitted, in particular, during or after making available the response data set,
and/or
- the status information includes, in particular, justification information for a refusal of the electronic signature.

7. The method according to any one of claims 1 to 6, wherein
- a signature service provider provides a secure signature environment,
- in a first identification step of the signature process, the initiator identifies and authorizes to the signature service provider to access the signature environment,
- in a step of the signature process that follows the first identification step, the initiator enters the electronic document into the secure environment and generates the request data set within the signature environment,
- in a second identification step, the at least one signer identifies and authorizes himself to the signature service provider for access to the signature environment, and
- the at least one signer generates, in the signature environment, the electronic signature over the electronic document and the response data set in a step of the signature process following the second identification step,
wherein
- the request data set is made available to the at least one signer and/or the response data set is made available to the at least one recipient, in particular, within the signature environment,
and/or
- a request message is transmitted to the at least one signer, the request message, in particular, comprising a link for access to the request data set made available in the signature environment, the request message, in particular, being transmitted at least in sections outside the signature environment,
and/or
- a reply message is transmitted to the at least one recipient, the reply message in particular comprising a link to access the response data set made available in the signature environment, the reply message, in particular, being transmitted at least in sections outside the signature environment.

8. The method of claim 7 wherein
- the signature service provider generates the electronic signature of the signer over the electronic document in the signature environment using a certificate that is assigned to the signer or to the signature service provider,
wherein
- for the electronic signature of the signer, in particular, a certificate of the signer is used which is available in the signature environment, in particular, is stored in a database of the signature service provider,
and/or
- for the electronic signature of the signer, in particular, a certificate of the signature service provider is used which is available in the signature environment, in particular, is stored in a database of the signature service provider,
and/or
- the signature service provider, for the electronic signature of the signer, in particular, accesses an external signature infrastructure assigned to the signer, which is integrated into the signature environment and includes a certificate of the signer, the electronic signature of the signer being generated by the external signature infrastructure, in particular, at the request of the signature service provider.

9. The method of claim 7 or 8, wherein
- the first identification step and/or the second identification step takes place using an online identification mechanism,
wherein
- in particular an electronic identity and/or an electronic identification document and/or an electronic signature card of the initiator and/or the signer is used.

10. The method according to any one of claims 7 to 9, wherein
- the initiator and/or the signer and/or the recipient, for access to the signature environment, uses a signature application that is at least partially executed on a local data processing device and/or at least partially executed on a remote server of the signature service provider,
wherein
- the signature application, in particular, comprises a first signature module and a second signature module, the first signature module being executed on the local data processing device and, in particular in the background, accessing the second signature module, which is executed on the remote server of the signature service provider,
and/or
- the signature application, in particular, is a component of an online conference application, the signature process being at least partially, in particular completely, carried out within an online conference session.

11. A signature system for electronically signing an electronic document, in particular, for carrying out a method according to one of claims 1 to 10, comprising
- at least one data processing device for executing at least part of a signature application, wherein
- the signature application is configured in such a way that an initiator (103) of a signature process generates a request data set that includes the electronic document and a signature request, the signature request including a request for an electronic signature of at least one signer (107, 109, 110) over at least the electronic document,
- the signature application is configured in such a way that the request data set is made available to the at least one signer for generating the electronic signature over at least the electronic document,
- the signature application is configured in such a way that the at least one signer generates an electronic signature over at least the electronic document and generates a positive response data set which includes at least the electronic document and the electronic signature, and
- the signature application is configured in such a way that the positive response data set is made available to at least one recipient, in particular, the initiator,
wherein
- at least two signature levels with different security levels of the electronic signature are specified for the electronic signature, and
- the signature application is configured in such a way that the signature request comprises a signature specification that can be specified by the initiator and that defines a minimum security level which the electronic signature of the at least one signer over the electronic document must at least have, wherein
- the signature application is configured in such a way that the initiator generates, as an initiator signature, an electronic signature over the electronic document and the request data set includes the initiator signature, wherein
- a security level of the initiator signature defines the minimum security level.

12. The signature system of claim 11, wherein
- the signature application is configured in such a way that the at least one signer can only generate the positive response data set if an electronic signature of the at least one signer has been generated over the electronic document in accordance with the signature specification,
and/or
- the signature application is configured in such a way that the positive response data set is only made available to the recipient if an electronic signature of the at least one signer has been generated over the electronic document in accordance with the signature specification,
and/or
- the signature application is configured in such a way that the at least one signer generates a negative response data set if he refuses the electronic signature in accordance with the signature specification, and the negative response data set is made available to the recipient,
and/or
- the signature application is configured in such a way that status information about a status of the signature process is generated and transmitted to a recipient, in particular to the initiator and/or to a status database that is held in the at least one data processing device.

13. The signature system of claim 11 or 12, wherein
- the at least one data processing device is a server of a signature service provider, and at least part of the signature application is executed on the server in order to provide a secure signature environment,
- the signature application is configured in such a way that, in a first identification step of the signature process, the initiator identifies and authorizes to the signature service provider to access the signature environment,
- the signature application is configured in such a way that, in a step of the signature process that follows the first identification step, the initiator enters the electronic document into the secure environment and generates the request data set within the signature environment,
- the signature application is configured in such a way that, in a second identification step, the at least one signer identifies and authorizes himself to the signature service provider for access to the signature environment, and
- the signature application is configured in such a way that the at least one signer generates, in the signature environment, the electronic signature over the electronic document and the response data set in a step of the signature process following the second identification step,
wherein
- the signature application is configured in such a way that the request data set is made available to the at least one signer and/or the response data set is made available to the at least one recipient, in particular, within the signature environment,
and/or
- the signature application is configured in such a way that a request message is transmitted to the at least one signer, the request message, in particular, comprising a link for access to the request data set from a further data processing device, in particular, from a local data processing device, wherein the request data set is made available in the signature environment, in particular, on the server, wherein the signature application is configured in such a way that the request message, in particular, is transmitted at least in sections outside the signature environment,
and/or
- the signature application is configured in such a way that a reply message is transmitted to the at least one recipient, the reply message in particular comprising a link to access the response data set from a further data processing device, in particular, from a local data processing device, wherein the response data set is made available in the signature environment, in particular, on the server, the signature application being configured in such a way that the reply message, in particular, is transmitted at least in sections outside the signature environment.
and/or
- the signature application is configured in such a way that the first identification step and/or the second identification step takes place using an online identification mechanism.

14. The signature system of claim 13, wherein
- the server is configured to generate the electronic signature of the signer over the electronic document in the signature environment using at least a part of the signature application using a certificate that is assigned to the signer or the signature service provider,
wherein
- the server is configured to use, using at least part of the signature application, for the electronic signature of the signer, in particular, to use a certificate of the signer that is available in the signature environment, in particular, is stored in a database of the server,
and/or
- the server is configured to use, using at least part of the signature application, for the electronic signature of the signer, in particular, a certificate of the signature service provider that is available in the signature environment, in particular, is stored in a database of the server,
and/or
- the server is configured to access, using at least part of the signature application, for the electronic signature of the signer, in particular, an external signature infrastructure assigned to the signer, which is integrated into the signature environment and includes a certificate of the signer, the external signature infrastructure, in particular, being configured to generate the electronic signature of the signer at the request of the server.

15. The signature system of claim 13 or 14, wherein
- at least one local data processing device is provided which is assigned to the initiator and/or the signer and/or recipient, the further data processing device being configured to use at least part of the signature application for access to the signature environment,
wherein
- the signature application, in particular, comprises a first signature module and a second signature module, wherein the first signature module is executed on the local data processing device and is configured, in particular, in the background, to access the second signature module, which is executed on the remote server of the signature service provider,
and/or
- the signature application, in particular, is a component of an online conference application, the signature application being configured to handle the signature process at least partially, in particular completely, within an online conference session.

16. Data carrier with an executable signature application for carrying out a method according to one of claims 1 to 10, on at least one data processing device.

## Revendications

1. Procédé de signature électronique d'un document électronique, dans laquelle
- un initiateur (103) d'un processus de signature génère un set de données de requête qui comprend le document électronique et une requête de signature, la requête de signature comprenant une requête d'une signature électronique d'au moins un signataire sur au moins le document électronique (105.1),
- le set de données de requête est mis à la disposition de l'au moins un signataire pour générer la signature électronique sur au moins le document électronique (101.6),
- l'au moins un signataire génère une signature électronique sur au moins le document électronique et génère un set de données de réponse positive qui comprend au moins le document électronique et la signature électronique (101.8), et
- le set de données de réponse positive est mis à la disposition d'au moins un destinataire, en particulier, de l'initiateur, (101.9),
dans lequel
- au moins deux niveaux de signature avec des niveaux de sécurité différents de la signature électronique sont spécifiés pour la signature électronique, et
- la requête de signature comprend une spécification de signature qui peut être spécifiée par l'initiateur et qui définit un niveau de sécurité minimum que la signature électronique de l'au moins un signataire sur le document électronique doit avoir, dans lequel
- l'initiateur génère, en tant que signature d'initiateur, une signature électronique sur le document électronique et le set de données de requête comprend la signature d'initiateur, dans lequel
- un niveau de sécurité de la signature de l'initiateur définit le niveau de sécurité minimum.

2. Procédé selon la revendication 1, dans lequel
- l'au moins un signataire ne peut générer le set de données de réponse positive que si une signature électronique de l'au moins un signataire a été générée sur le document électronique conformément à la spécification de signature,
et/ou
- le set de données de réponse positive n'est mis à la disposition du destinataire que si une signature électronique de l'au moins un signataire a été générée sur le document électronique conformément à la spécification de signature.

3. Procédé selon la revendication 1 ou 2, dans lequel
- l'au moins un signataire génère un set de données de réponse négative s'il refuse la signature électronique conformément à la spécification de signature, et
- le set de données de réponse négative est mis à la disposition du destinataire,
dans lequel
- le set de données de réponse négative comprend au moins une référence à le set de données de requête, en particulier comprend une identification du set de données de requête,
et/ou
- le set de données de réponse négative comprend le document électronique, et/ou
- le set de données de réponse négative comprend des informations de justification pour le refus de la signature électronique conformément à la spécification de signature.

4. Procédé selon l'une quelconque des revendications 1 à 3, dans lequel
- le niveau de sécurité de la signature de l'initiateur définit le niveau de sécurité minimum si l'initiateur ne fait pas de spécification divergente par rapport au niveau de sécurité minimum.

5. Procédé selon l'une quelconque des revendications 1 à 4, dans lequel
- le au moins un signataire est un premier signataire, la requête de signature électronique du premier signataire dans le set de données de requête est une première requête de première signature électronique et le set de données de réponse est un premier set de données de réponse,
- l'initiateur ajoute au set de données de requête et/ou le premier signataire ajoute au premier set de données de réponse une deuxième requête d'une deuxième signature électronique d'un deuxième signataire sur au moins le document électronique,
- le premier set de données de réponse est mis à la disposition du deuxième signataire pour générer la deuxième signature électronique sur au moins le document électronique,
- le deuxième signataire génère la deuxième signature électronique sur au moins le document électronique et génère un deuxième set de données de réponse qui comprend au moins le document électronique et la deuxième signature électronique et, en particulier, la première signature électronique, et
- le deuxième set de données de réponse est mis à la disposition d'au moins un destinataire, en particulier, de l'initiateur,
dans lequel
- la deuxième requête comprend, en particulier, une spécification deuxième de signature prédéterminable qui définit un niveau de sécurité minimum que la deuxième signature électronique du deuxième signataire sur le document électronique doit avoir au moins,
- le niveau de sécurité minimum de la deuxième signature électronique, en particulier, est le même que le niveau de sécurité minimum de la première signature électronique ou est différent du niveau de sécurité minimum de la première signature électronique.

6. Procédé selon l'une quelconque des revendications 1 à 5, dans lequel
- des informations d'état sur un état du processus de signature sont générées et transmises à un destinataire, en particulier, à l'initiateur et/ou à une base de données d'état,
dans laquelle
- le set de données de réponse et/ou le set de données de requête comprend les informations d'état,
et/ou
- les informations d'état sont mises à jour, en particulier, pendant ou après la création d'une signature électronique,
et/ou
- les informations d'état sont transmises, en particulier, pendant ou après la création d'une signature électronique,
et/ou
- les informations d'état sont transmises, en particulier, pendant ou après la mise à disposition du set de données de réponse,
et/ou
- les informations d'état comprennent, en particulier, des informations de justification d'un refus de la signature électronique.

7. Procédé selon l'une quelconque des revendications 1 à 6, dans lequel
- un fournisseur de services de signature fournit un environnement de signature sécurisé,
- dans une première étape d'identification du processus de signature, l'initiateur s'identifie et s'autorise auprès du fournisseur de service de signature pour accéder à l'environnement de signature,
- dans une étape du processus de signature qui suit la première étape d'identification, l'initiateur fait entrer le document électronique dans l'environnement sécurisé et génère le set de données de requête au sein de l'environnement de signature,
- dans une deuxième étape d'identification, l'au moins un signataire s'identifie et s'autorise auprès du fournisseur de service de signature pour accéder à l'environnement de signature,
- dans une étape du processus de signature suivant la seconde étape d'identification, le au moins un signataire génère, dans l'environnement de signature, la signature électronique sur le document électronique et le set de données de réponse
dans lequel
- le set de données de requête est mis à disposition dudit au moins un signataire et/ou le set de données de réponse est mis à disposition dudit au moins un destinataire, en particulier, au sein de l'environnement de signature,
et/ou
- un message de requête est transmis a l'au moins un signataire, le message de requête comprenant, en particulier, un lien d'accès à le set de données de requête mis à disposition dans l'environnement de signature, le message de requête étant transmis, en particulier, au moins en sections hors de l'environnement de signature,
et/ou
- un message de réponse est transmis a l'au moins un destinataire, le message de réponse comprenant, en particulier, un lien pour accéder au set de données de réponse mis à disposition dans l'environnement de signature, le message de réponse étant transmis, en particulier, au moins en sections hors de l'environnement de signature.

8. Procédé selon la revendication 7, dans lequel
- le fournisseur de service de signature génère la signature électronique du signataire sur le document électronique dans l'environnement de signature en utilisant un certificat qui est attribué au signataire ou au fournisseur de service de signature,
dans lequel
- pour la signature électronique du signataire, en particulier, un certificat du signataire est utilisé, qui est disponible dans l'environnement de signature, en particulier est stocké dans une base de données du fournisseur de service de signature,
et/ou
- pour la signature électronique du signataire, en particulier, un certificat du fournisseur de service de signature est utilisé, qui est disponible dans l'environnement de signature, en particulier, stocké dans une base de données du fournisseur de service de signature,
et/ou
- le fournisseur de service de signature, pour la signature électronique du signataire, en particulier, accède à une infrastructure de signature externe attribuée au signataire, qui est intégrée à l'environnement de signature et comprend un certificat du signataire, la signature électronique du signataire étant générée par l'infrastructure de signature, en particulier, à la demande du fournisseur de service de signature.

9. Procédé selon la revendication 7 ou 8, dans lequel
- la première étape d'identification et/ou la deuxième étape d'identification a lieu à l'aide d'un mécanisme d'identification en ligne,
dans lequel
- on utilise, en particulier, une identité électronique et/ou un document d'identification électronique et/ou une carte de signature électronique de l'initiateur et/ou du signataire.

10. Procédé selon l'une quelconque des revendications 7 à 9, dans lequel
- l'initiateur et/ou le signataire et/ou le destinataire, pour l'accès à l'environnement de signature, utilise une application de signature qui est au moins partiellement exécutée sur un dispositif local de traitement de données et/ou au moins partiellement exécutée sur un serveur distant du fournisseur de service de signature,
dans lequel
- l'application de signature comprend, en particulier, un premier module de signature et un deuxième module de signature, le premier module de signature étant exécuté sur le dispositif local de traitement de données et, en particulier, en arrière-plan, accédant au deuxième module de signature, qui est exécuté sur le serveur distant du fournisseur de services de signature,
et/ou
- l'application de signature, en particulier, est un composant d'une application de conférence en ligne, le processus de signature étant au moins partiellement, en particulier, totalement, réalisé au sein d'une session de conférence en ligne.

11. Système de signature pour signer électroniquement un document électronique, en particulier, pour mettre en oeuvre un procédé selon l'une des revendications 1 à 10, comprenant
- au moins un dispositif de traitement de données pour exécuter au moins une partie d'une application de signature, dans lequel
- l'application de signature est conçue de telle manière qu'un un initiateur (103) d'un processus de signature génère un set de données de requête qui comprend le document électronique et une requête de signature, la requête de signature comprenant une requête d'une signature électronique d'au moins un signataire (107, 109, 110) sur au moins le document électronique,
- l'application de signature est conçue de telle manière que le set de données de requête est mis à la disposition de l'au moins un signataire pour générer la signature électronique sur au moins le document électronique,
- l'application de signature est conçue de telle manière que l'au moins un signataire génère une signature électronique sur au moins le document électronique et génère un set de données de réponse positive qui comprend au moins le document électronique et la signature électronique, et
- l'application de signature est conçue de telle manière que le set de données de réponse positive est mis à la disposition d'au moins un destinataire, en particulier, de l'initiateur,
dans lequel
- au moins deux niveaux de signature avec des niveaux de sécurité différents de la signature électronique sont spécifiés pour la signature électronique, et
- l'application de signature est conçue de telle manière que la requête de signature comprend une spécification de signature qui peut être spécifiée par l'initiateur et qui définit un niveau de sécurité minimum que la signature électronique de l'au moins un signataire sur le document électronique doit avoir, dans lequel
- l'application de signature est conçue de telle manière que l'initiateur génère, en tant que signature d'initiateur, une signature électronique sur le document électronique et le set de données de requête comprend la signature d'initiateur, dans lequel
- un niveau de sécurité de la signature de l'initiateur définit le niveau de sécurité minimum.

12. Système de signature selon la revendication 11, dans lequel
- l'application de signature est conçue de telle sorte que l'au moins un signataire ne peut générer le set de données de réponse positive que si une signature électronique de l'au moins un signataire a été générée sur le document électronique conformément à la spécification de signature,
et/ou
- l'application de signature est conçue de telle sorte que le set de données de réponse positive n'est mis à la disposition du destinataire que si une signature électronique de l'au moins un signataire a été générée sur le document électronique conformément à la spécification de signature.
et/ou
- l'application de signature est conçue de telle sorte que l'au moins un signataire génère un set de données de réponse négative s'il refuse la signature électronique conformément à la spécification de signature, et le set de données de réponse négative est mis à la disposition du destinataire,
et/ou
- l'application de signature est conçue de telle sorte que des informations d'état sur un état du processus de signature sont générées et transmises à un destinataire, en particulier, à l'initiateur et/ou à une base de données d'état qui est maintenue dans l'au moins un dispositif de traitement de données.

13. Système de signature selon la revendication 11 ou 12, dans lequel
- l'au moins un dispositif de traitement de données est un serveur d'un fournisseur de service de signature, et au moins une partie de l'application de signature est exécutée sur le serveur afin de fournir un environnement de signature sécurisé,
- l'application de signature est conçue de telle sorte que, dans une première étape d'identification du processus de signature, l'initiateur s'identifie et s'autorise auprès du fournisseur de service de signature pour accéder à l'environnement de signature,
- l'application de signature est conçue de telle sorte que, dans une étape du processus de signature qui suit la première étape d'identification, l'initiateur fait entrer le document électronique dans l'environnement sécurisé et génère le set de données de requête au sein de l'environnement de signature,
- l'application de signature est conçue de telle sorte que, dans une deuxième étape d'identification, l'au moins un signataire s'identifie et s'autorise auprès du fournisseur de service de signature pour accéder à l'environnement de signature,
- l'application de signature est conçue de telle sorte que, dans une étape du processus de signature suivant la seconde étape d'identification, le au moins un signataire génère, dans l'environnement de signature, la signature électronique sur le document électronique et le set de données de réponse,
dans lequel
- l'application de signature est conçue de telle sorte que le set de données de requête est mis à disposition dudit au moins un signataire et/ou le set de données de réponse est mis à disposition dudit au moins un destinataire, en particulier, au sein de l'environnement de signature,
et/ou
- l'application de signature est conçue de telle sorte qu'un message de requête est transmis a l'au moins un signataire, le message de requête comprenant, en particulier, un lien d'accès à le set de données de requête par un autre dispositif de traitement de données, en particulier, par un dispositif de traitement de données local, le set de données de requête étant mis à disposition dans l'environnement de signature, en particulier, sur le serveur, l'application de signature est conçue de telle sorte que le message de requête est transmis, en particulier, au moins en sections hors de l'environnement de signature,
et/ou
- l'application de signature est conçue de telle sorte qu'un message de réponse est transmis a l'au moins un destinataire, le message de réponse comprenant, en particulier, un lien pour accéder au set de données de réponse par un autre dispositif de traitement de données, en particulier, par un dispositif de traitement de données local, set de données de réponse étant mis à disposition dans l'environnement de signature, en particulier, sur le serveur, le message de réponse étant transmis, en particulier, au moins en sections hors de l'environnement de signature,
- l'application de signature est conçue de telle sorte que la première étape d'identification et/ou la deuxième étape d'identification se déroule à l'aide d'un mécanisme d'identification en ligne.

14. Système de signature selon la revendication 13, dans lequel
- le serveur est conçu pour générer la signature électronique du signataire sur le document électronique dans l'environnement de signature en utilisant au moins une partie de l'application de signature à l'aide d'un certificat qui est attribué au signataire ou au fournisseur de service de signature,
dans lequel
- le serveur est conçu pour utiliser, utilisant au moins une partie de l'application de signature, pour la signature électronique du signataire, en particulier, pour utiliser un certificat du signataire disponible dans l'environnement de signature, en particulier, stocké dans une base de données du serveur,
et/ou
- le serveur est conçu pour utiliser, utilisant au moins une partie de l'application de signature, pour la signature électronique du signataire, en particulier, un certificat du fournisseur de service de signature disponible dans l'environnement de signature, en particulier, stocké dans une base de données du serveur, et/ou
- le serveur est conçu pour accéder, utilisant au moins une partie de l'application de signature, pour la signature électronique du signataire, en particulier, à une infrastructure de signature externe attribuée au signataire, qui est intégrée à l'environnement de signature et comprend un certificat du signataire, l'infrastructure de signature externe étant conçu, en particulier, pour générer la signature électronique du signataire à la demande du serveur.

15. Système de signature selon la revendication 13 ou 14, dans lequel
- il est prévu au moins un dispositif local de traitement de données qui est affecté à l'initiateur et/ou au signataire et/ou au destinataire, l'autre dispositif de traitement de données étant conçu pour utiliser au moins une partie de l'application de signature pour accéder à l'environnement de signature,
dans lequel
- l'application de signature comprend, en particulier, un premier module de signature et un deuxième module de signature, dans lequel le premier module de signature est exécuté sur le dispositif local de traitement de données et est conçu, en particulier, en arrière-plan, pour accéder au deuxième module de signature, qui est exécuté sur le serveur distant du fournisseur de services de signature
et/ou
- l'application de signature, en particulier, est un composant d'une application de conférence en ligne, l'application de signature étant conçue pour gérer au moins partiellement, en particulier, complètement, le processus de signature au sein d'une session de conférence en ligne.

16. Porteur de données avec une application de signature exécutable pour la mise en œuvre d'un procédé selon l'une des revendications 1 à 10, sur au moins un dispositif de traitement de données.
